# EUROPÄISCHE PATENTANMELDUNG

(11) **EP 1 691 325 A1**
(43) Veröffentlichungstag der Anmeldung: **16.08.2006**
(21) Anmeldenummer: 05002660.8
(22) Anmeldetag: 09.02.2005
(51) Int. Cl.: G06Q 10/00

(54) **Transaktionssystem zum Verarbeiten von Transaktionsinformationen und Verfahren zur Durchführung von Transaktionen**

(71) Anmelder: Deutsche Post AG, 53113 Bonn (DE)
(72) Erfinder: Kranz, Jürgen, 50374 Erftstadt (DE); Westerweller, Jörg, 51570 Windeck/Rosbach (DE)
(74) Vertreter: Jostarndt, Hans-Dieter

(57) **Zusammenfassung**

Die Erfindung betrifft ein Transaktionssystem zum Verarbeiten von Transaktionsinformationen.

Erfindungsgemäß zeichnet sich das Transaktionssystem dadurch aus, dass es mindestens ein Vorgangsbearbeitungsmodul (VGA) enthält, dass das Vorgangsbearbeitungsmodul (VGA) Transaktionsinformationen erzeugt und/oder verarbeitet, dass das Vorgangsbearbeitungsmodul (VGA)mit einem Session-Manager (SM) verbindbar sind, dass der Session-Manager (SM) so ausgebildet ist, dass er die Transaktionsinformationen in Form von Sessions speichern und verwalten kann und dass der Session-Manager (SM) mit einem Speicherelement zum Speichern verbunden ist und ein Speichern folgender Informationen in dem Speicherelement steuert:
- Session-Identifikationsangaben (Session-ID) zum Identifizieren einzelner Sessions,
- Datenwerte für die einzelnen Sessions.

## Beschreibung

Die Erfindung betrifft ein Transaktionssystem zum Verarbeiten von Transaktionsinformationen.

Die Erfindung betrifft ferner ein Verfahren zur Durchführung von Transaktionen.

Ein gattungsgemäßes Transaktionssystem sowie ein gattungsgemäßes Verfahren sind aus der Europäischen Patentschrift EP 0 938 715 B1 sowie ihrer deutschen Übersetzung DE 697 07 009 T2 bekannt.

Das gattungsgemäße Transaktionssystem sieht eine Umgebung zum Verarbeiten von Transaktionsinformationen mehrerer Absender und Versandunternehmen vor. Dieses bekannte Transaktionssystem weist einen zentralen Prozessor auf, der auf Transaktionsinformationen anspricht, Berechtigungsprofilkriterien abspeichert und feststellt, ob die Transaktionsinformationen den Berechtigungsprofilkriterien entsprechen, wobei die Berechtigungsprofilkriterien Informationen über autorisierte Benutzer enthalten.

Es ist wünschenswert, ein Transaktionssystem bereitzustellen, das eine besonders hohe Flexibilität aufweist und so zu einer Bearbeitung von unterschiedlichen Anforderungen geeignet ist. Insbesondere ist es wünschenswert, eine schnelle und zeitnahe Abrechnung von verschiedenen Leistungen zu ermöglichen.

Der Begriff Leistungen ist in keiner Weise einschränkend zu verstehen. Der Begriff Leistungen umfasst sowohl jegliches zur Verfügung stellen von Waren, sei es durch Verkauf, Vermietung oder Verpachtung, jegliche Form von Dienstleistungen sowie auch virtuelle Dienstleistungen wie Zugang zu Kommunikationssystemen und Informationen.

Der Begriff Leistungserbringer ist gleichfalls in allgemeiner Weise zu verstehen und umfasst jegliche Einheit, welche in der Lage ist, die zuvor genannten Leistungen zu erbringen. Insbesondere kann der Leistungserbringer sowohl eine physische Einheit sein, beispielsweise ein Verkaufsautomat für Waren oder Dienstleistungen, oder eine organisatorische Einheit, beispielsweise ein Dienstleistungsunternehmen oder eine Filiale eines vorzugsweise mehrere Filialen umfassenden Unternehmens.

Erfindungsgemäß wird ein Transaktionssystem nach Anspruch 1 und ein Verfahren nach Anspruch 10 bereitgestellt.

Die Erfindung beinhaltet insbesondere ein Transaktionssystem zum Verarbeiten von Transaktionsinformationen, das sich dadurch auszeichnet, dass das Transaktionssystem mindestens ein Vorgangsbearbeitungsmodul enthält, dass das Vorgangsbearbeitungsmodul die Transaktionsinformationen erzeugen und/oder verarbeiten, dass die Vorgangsbearbeitungsmodule mit einem Session-Manager verbindbar sind, dass der Session-Manager so ausgebildet ist, dass er die Transaktionsinformationen in Form von Sessions speichern und verwalten kann und dass der Session-Manager mit einem Speicherelement zum Speichern verbunden ist und ein Speichern folgender Informationen in dem Speicherelement steuert:
- Session-Identifikationsangaben (Session-ID) zum Identifizieren einzelner Sessions,
- Datenwerte für die einzelnen Sessions.

Die Erfindung beinhaltet somit eine Erzeugung und Speicherung einzelner Sessions. Ferner wird zu jeder Session eine die Session identifizierende Session-Identifikationsangabe (Session-ID) und wenigstens ein zugehöriger Datenwert für die jeweilige Session gespeichert.

Die Erfindung beinhaltet ferner ein Verfahren zur Durchführung von Transaktionen.

Die Erfindung eignet sich für einen Einsatz bei beliebigen Transaktionen. Erfindungsgemäße Transaktionen umfassen sowohl konventionelle Transaktionen, bei denen eine Abfolge von Operationen nur komplett oder gar nicht durchgeführt wird, als auch neuartige Transaktionstypen, bei denen nur eine Bereitstellung von Informationen und/oder nur eine Durchführung von Funktionen erfolgt. Es ist ein Vorteil des erfindungsgemäßen Transaktionssystems, dass es sich sowohl bei konventionellen Transaktionen als auch bei nicht-konventionellen Transaktionen einsetzen lässt.

Ein Einsatz der Erfindung bei konventionellen Transaktionen ist vorteilhaft, wenn eine Vollständigkeit von Transaktionen sichergestellt werden muss. In diesem Fall werden transaktionale Änderungen an Datenbeständen erst dauerhaft gespeichert, wenn die Transaktion vollständig durchlaufen ist.

Eine besonders bevorzugte Ausführungsform des Transaktionssystems und des Verfahrens zum Verarbeiten von Transaktionsinformationen zeichnet sich dadurch aus, dass die Sessions-Identifikationsangaben als fortlaufende Nummern ausgebildet sind.

Ferner ist es zweckmäßig, dass die Sessions eine variable Anzahl von Datenelementen enthalten.

Insbesondere sieht die Erfindung vor, Sessions einzusetzen, die eine variable Anzahl von Datenelementen enthalten. Insbesondere stellt eine besonders bevorzugte erfindungsgemäße Session eine Menge von Datenelementen dar. Die Datenelemente können verschiedene Eigenschaften aufweisen und sich in einer besonders bevorzugten Ausführungsform sowohl auf eine einzelne Transaktion beziehen - beispielsweise als Teilschritte einer Transaktion - als auch mehrere Transaktionen umfassen.

Eine besonders bevorzugte Ausführungsform der Erfindung zeichnet sich dementsprechend dadurch aus, dass die Datenelemente sich auf eine einzelne Transaktion beziehen.

Eine weitere, gleichfalls bevorzugte Ausführungsform der Erfindung ist dadurch gekennzeichnet, dass die einer Session zugehörigen Datenelemente Transaktionsinformationen von mehreren Transaktionen umfassen.

Ein Beispiel für eine mehrere Transaktionen umfassende Session ist eine Kassen-Session, die alle in einem vorgebbaren Zeitraum anfallenden Transaktionsinformationen umfasst.

Es ist besonders vorteilhaft, dass Sessions gleichfalls andere Sessions als Elemente umfassen können.

Am Beispiel einer Kassen-Session bedeutet dies beispielsweise, dass mehrere Bearbeitungsvorgänge für einen Kunden - beispielsweise die Abrechnung unterschiedlicher Waren und/oder Dienstleistungen - in einer Session zusammengefasst werden können.

Die einzelnen Kunden-Sessions werden in einem separaten Bearbeitungsschritt durch den Session-Manager zu einer die einzelnen Sessions umfassenden Kassen-Session zusammengefasst.

Das Vorhandensein derartig strukturierter Sessions ermöglicht es, sofern entsprechende Identifikationsangaben (Session-ID) vorhanden sind, die einzelnen Bestandteile einer Session zu identifizieren.

Es ist besonders vorteilhaft, eine Datenspeicherung innerhalb der Vorgangsbearbeitungsmodule vorzusehen. Hierdurch wird sichergestellt, dass die Vorgangsbearbeitungsprozessoren jeweils unmittelbar auf die für die Vorgangsbearbeitung erforderlichen Daten zugreifen können.

Ferner lässt sich das erfindungsgemäße Transaktionssystem jedoch auch für die erfindungsgemäß mit umfassten nicht-konventionellen Transaktionen einsetzen, bei denen keine gemeinsame Folge von Verarbeitungsschritten erforderlich ist. Ein Beispiel hierfür ist eine Kontostandsabfrage, bei der keine Veränderung des Datenbestandes erfolgt. Insbesondere umfassen die erfindungsgemäßen Transaktionen sowohl sämtliche Arten der Darstellung von Informationen, der Durchführung von Funktionen sowie datenverändernde und nicht datenverändernde Vorgänge. Ferner sind sowohl statuslose als auch statusbehaftete Transaktionen umfasst.

Durch die Erfindung werden mehrere vorteilhafte technische Wirkungen erzielt.

Ein durch die Erfindung erreichter Vorteil ist, dass Transaktionen auch bei einer Unterbrechung von Datenverarbeitungsvorgängen ohne Datenverlust fortgeführt werden können.

Hierzu ist es insbesondere zweckmäßig, Checkpoints einzusetzen. Die Checkpoints erleichtern einen Zugriff auf die in den einzelnen Sessions enthaltenen Datenelemente.

Ferner ist es durch die Erfindung möglich, Bearbeitungsvorgänge zu unterbrechen und zu einem beliebigen späteren Zeitpunkt fortzusetzen.

Dies ist insbesondere bei Systemen von Vorteil, bei denen eine Vielzahl von Bearbeitungsvorgängen im Wesentlichen zeitgleich erfolgt.

Bei einem Einsatz der Erfindung in einem Filialsystem ist es beispielsweise möglich, einzelne Bearbeitungsvorgänge von Kunden in der Bearbeitungsreihenfolge vorzuziehen.

Ferner ist es möglich, einen Bearbeitungsvorgang gezielt zu unterbrechen, beispielsweise um in einem separaten Überprüfungsschritt Identifikationsangaben zu einem Kunden zu verifizieren, oder auf eine durch einen Ausfall einer Hardware-Komponente bedingte Unterbrechung zu reagieren und die Transaktionsvorgänge nach Behebung des Ausfalls ohne Datenverlust fortzusetzen.

Die technischen Wirkungen können sowohl durch einzelne Mittel erzielt werden als auch durch die Kombination mehrerer Mittel, was besonders vorteilhaft ist.

Beispielsweise kann ein erfindungsgemäß ausgestaltetes Transaktionssystem schnell und mit geringem Aufwand an neue Vorgänge angepasst werden.

Durch eine Zuordnung einzelner Vorgänge zu einzelnen Vorgangsbearbeitungsmodulen wird die Flexibilität weiter erhöht.

Ferner wird eine gegenseitige Beeinflussung der Bearbeitung verschiedener Vorgänge vermieden.

Insbesondere durch indirekte Datenübertragung über definierte, gesteuerte Datenübertragungskanäle wird die gegenseitige Beeinflussung weiter verringert.

Ferner ist es vorteilhaft, dass die einzelnen Module jeweils für die Ausführung spezifischer Vorgangsarten ausgerüstet sind.

Es ist besonders vorteilhaft, die Vorgangsbearbeitungsmodule so auszugestalten, dass sie voneinander unabhängig unterschiedliche Funktionen wahrnehmen können.

Vorzugsweise ist das erfindungsgemäße System so aufgebaut, dass die Module beliebig ausgetauscht, entfernt oder hinzugefügt werden können.

Die Vorgangsbearbeitungsmodule können durch Plug & Play-Installation einfach angeschlossen werden, ohne dass das Gesamtsystem geändert werden muss. Die Vorgangsbearbeitungsmodule greifen auf unterschiedliche weitere Module des Systems zu.

Durch die Modularstruktur wird eine einfache Integration von neuen Vorgangsarten in das Datenverarbeitungssystem ermöglicht.

Eine besonders bevorzugte Ausführungsform der Erfindung zeichnet sich dadurch aus, dass ein Context-Manager sowohl als zentrales Steuerungsmittel für die Vorgangsbearbeitungsmodule als auch als zentraler Dienstanbieter für die Vorgangsbearbeitungsmodule ausgebildet ist.

Ferner ist es vorteilhaft, dass das Transaktionssystem eine Benachrichtigungskomponente aufweist, wobei die Benachrichtigungskomponente ein Übermitteln von Daten ermöglicht.

Eine besonders zweckmäßige Ausführungsform der Erfindung zeichnet sich dadurch aus, dass die Benachrichtigungskomponente ein Auswahlmodul zur Auswahl von Übertragungswegen zum Übermitteln der Benachrichtigungen enthält.

Hierdurch ist es möglich, unterschiedlichen Typen von Benachrichtigungen unterschiedliche Übertragungswege zuzuordnen und so Übertragungskapazitäten besonders wirksam zu nutzen.

Eine besonders bevorzugte Ausführungsform der Erfindung zeichnet sich dadurch aus, dass ein Session-Manager ein Modul zur Verwaltung zusammenhängender Rohdatensätze enthält.

Eine besonders vorteilhafte Ausführungsform dieser Variante der Erfindung zeichnet sich dadurch aus, dass der Session-Manager mit einer Rohdatenkomponente verbunden ist.

Ferner ist es zweckmäßig, dass der Context-Manager Schnittstellen bereithält, die eine Datenübertragung zwischen dem Session-Manager und der Rohdatenkomponente ermöglichen können.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

Von den Figuren zeigt:
- Fig. 1: eine Prinzipdarstellung eines erfindungsgemäßen Transaktionssystems;
- Fig. 2: eine Prinzipdarstellung von besonders bevorzugten Bestandteilen des erfindungsgemäßen Transaktionssystems;
- Fig. 3: ein Sequenzdiagramm mit Zugriff auf Session-Daten;
- Fig. 4: ein Sequenzdiagramm mit Erzeugung einer weiteren Session-Objekt-Instanz und
- Fig. 5: ein Sequenzdiagramm mit Transaktionsunterstützung beim Session-Handling.

Das erfindungsgemäße Transaktionssystem weist mehrere Komponenten auf, die so miteinander verbunden sind, dass eine besonders wirksame Durchführung von Bearbeitungsvorgängen ermöglicht wird.

Obwohl vor allem ein Zusammenwirken mehrerer der erfindungsgemäßen Komponenten besonders zweckmäßig ist, weisen bereits die einzelnen Komponenten vorteilhafte Wirkungen auf.

In den Abbildungen wird der Einsatz der Erfindung bei der Erzeugung, Verwaltung und Übermittlung von Daten eines aufwendigen Datenbanksystems dargestellt. Das Datenverarbeitungssystem enthält mehrere Vorgangsbearbeitungsmodule, die jeweils - vorzugsweise unabhängig voneinander - Daten erhalten und/oder übermitteln.

Es ist besonders vorteilhaft, die Erfindung bei einem komplexen System einzusetzen, da hier die Anzahl von zu bearbeitenden Daten mit unterschiedlichen Eigenschaften besonders hoch ist und so die positiven Effekte der Erfindung besonders gut wirken.

Es ist jedoch gleichfalls möglich, die Erfindung bei einem weniger aufwendigen System einzusetzen und auch dort die Vorteile einer wirksameren Nutzung von Netzwerkressourcen zu erzielen.

Die Erfindung eignet sich insbesondere für einen Einsatz in einem Netzwerk, welches einen oder mehrere Server beinhaltet. Ein Client initialisiert bei seinem Start einen Anwendungsrahmen. Der Client kann dabei eine Plattform mit weiteren Komponenten eines Frameworks wie Datenbanken, Abrechnungsmodule etc. nutzen. In einem besonders bevorzugten Ausführungsbeispiel der Erfindung kann eine als Carbon (Component ARchitecture for Business OptimizatioN)-Plattform bezeichnete Plattform genutzt werden, welche sowohl durch geeignete Hardware-Komponenten (zum Beispiel auf Grundlage programmierbarer elektronischer Bauelemente) als auch unter Einsatz von Software realisiert und auf Datenverarbeitungsanlagen installiert sein kann. Das Framework beinhaltet dabei die Laufzeitbibliothek der Plattform, welche auch als Common Language Runtime bezeichnet wird (CLR). Nach der Initialisierung des Anwendungsrahmens durch den Client initialisiert und startet dieser zweckmäßigerweise den Kern des Frameworks. Vor der Initialisierung des Kerns können Prüfungen durchgeführt werden, welche beispielsweise die Integrität des Programms betreffen. Ferner kann überprüft werden, ob es sich um einen Start oder einen Recovery-Fall handelt, welcher durch einen Abbruch eines Vorganges erzeugt wurde.

Das Vorgangsbearbeitungsmodul befindet sich vorzugsweise zusammen mit einer Datenkomponente auf dem Client. Dabei können zwischen die Datenkomponente und das Vorgangsbearbeitungsmodul weitere Komponenten oder Funktionseinheiten insbesondere des verwendeten Frameworks geschaltet sein, so dass es sich auch um eine indirekte Verbindung handeln kann. Die Datenkomponente ist vorzugsweise im Frontend des Computersystems angeordnet, sie kann jedoch je nach Ausbildung des Systems auch dem Backend zugeordnet werden. Das Vorgangsbearbeitungsmodul bildet elektronisch einen Vorgang oder Geschäftsprozess ab, welcher von dem Vorgangsbearbeitungsmodul abgewickelt wird. Bei den Vorgängen handelt es sich beispielsweise um Transaktionen innerhalb eines Retailsystems, welche im Bereich des Finanz-, Versicherungs-, und Logistikwesens eingesetzt werden. Ferner können auf dem Client mehrere verschiedene Versionen eines Vorgangsbearbeitungsmoduls installiert sein. Beim Starten des Vorgangsbearbeitungsmoduls wird automatisch die Version mit der höchsten Versionsnummer herangezogen. Um dies zu ermöglichen, sind die Vorgangsbearbeitungsmodule zweckmäßigerweise in einer bestimmten Weise in einem Vorgangsbearbeitungsmodul-Verzeichnis abgelegt worden.

In einem bevorzugten Ausführungsbeispiel der Erfindung ist das Vorgangsbearbeitungsmodul ebenfalls an ein Framework angeschlossen, das vorzugsweise objektorientiert und komponentenorientiert ausgebildet ist. Bei dem Framework handelt es sich um ein Application Programming Interface (API), welches die Funktionalitäten bereitstellt, Clients für verschiedene Assistent-basierte Vorgangsarten zu erstellen. Die von dem Framework zur Verfügung gestellten Funktionalitäten umfassen beispielsweise Kernfunktionalitäten wie das Starten/Beenden des Clients oder der Vorgangsbearbeitungsmodule. Das Framework stellt beispielsweise ein gemeinsames Startmodul zum Starten der Vorgangsbearbeitungsmodule bereit. Ferner unterstützt das Framework die Vorgangsbearbeitungsmodule bei Datenhaltung und Ablaufsteuerung und stellt Komponenten für den Zugriff auf Daten oder zum Drucken bereit. Darüber hinaus werden Basis-funktionalitäten wie die Protokollierung oder die Fehlerbehandlung bereitgestellt.

Als vollständig objektorientierte Programmiersprache innerhalb des Frameworks kann beispielsweise C# verwendet werden. Die objektorientierte Programmierung sieht Objekt-Klasse-Beziehungen vor, wobei eine Klasse ein abstrakter Oberbegriff für Objekte ist, die eine gemeinsame Struktur und/oder ein gemeinsames Verhalten aufweisen. Ein Objekt ist dabei ein zur Laufzeit eines Programms vorhandenes Exemplar einer Klasse, für das Speicherplatz zur Verfügung gestellt wird. Ein Objekt ist eine Instanz einer Klasse. Eine Klasse und damit ihre Objekte werden durch Attribute, Operationen, Zusicherungen und Beziehungen charakterisiert, wobei die Klassen die Attribute und Methoden zu einer Einheit zusammenfassen. Die Attribute sind standardmäßig nur über Methoden der Klasse zugänglich, so dass eine Kapselung oder Zugriffsbeschränkung vorliegt. Eine Klasse kann ferner keine, eine oder mehrere explizite Schnittstellen besitzen und die Kapselung trennt die Implementierung von der Schnittstelle.

In einem besonders bevorzugten Ausführungsbeispiel der Erfindung ist das Vorgangsbearbeitungsmodul kein eigenständiges Programm, sondern benötigt zu seiner Ausführung die Infrastruktur eines Clients. Es handelt sich jedoch um eine aktive Komponente, welche beispielsweise das eigene Pausieren und/oder den Start anderer Vorgangsbearbeitungsmodule bewirken kann. Ein Pausieren erfolgt bei einem Arbeitsplatzstack vorzugsweise durch Auflegen eines zusätzlichen Layers.

Ferner können einzelne Vorgangsbearbeitungsmodule im Frontend auf dem Client angeordnet sein, während sich andere Bereiche im Backend, das heißt auf einer zentralen ServerApplication oder in einem Umsystem befinden können. Umsysteme sind die Bezeichnung für Systeme außerhalb des Filialsystems.

Auf dem Computermittel sind vorzugsweise mehrere Vorgangsbearbeitungsmodule installiert, welche jeweils einen Vorgang abbilden. Die Vorgangsbearbeitungsmodule können sich dabei im Frontend oder im Backend des Computersystems befinden. Vorzugsweise sind die Vorgangsbearbeitungsmodule wie die Datenkomponente im Frontend angeordnet. Ferner ist es zweckmäßig, dass das Computersystem aus mehreren Komponenten besteht.

Nachfolgend werden besonders bevorzugte Bestandteile der Erfindung dargestellt:

### Adapterkomponente:

Die Adapterkomponente stellt als Schnittstelle eine Verbindung zwischen der Zugriffskomponente und den verschiedenen Datensystemen her. Die Adapterkomponente kapselt die Zugriffe auf die nativen Schnittstellen der unterstützten Datensysteme und ermöglicht insbesondere die Anbindung von Online- und Offline-Datensystemen. Die Adapterkomponente setzt dabei vorzugsweise direkt auf die Datensysteme oder eine verwendete Middleware auf.

Beispielsweise können entsprechende Adapter für den Zugriff auf verschiedene Datenbanken vorgesehen sein. Durch ein verwendetes Framework können als Adapter für den lokalen Datenbankzugriff zur Verfügung stehen. Vorzugsweise wird für jeden Adapter eine entsprechende Datenaktion bereitgestellt.

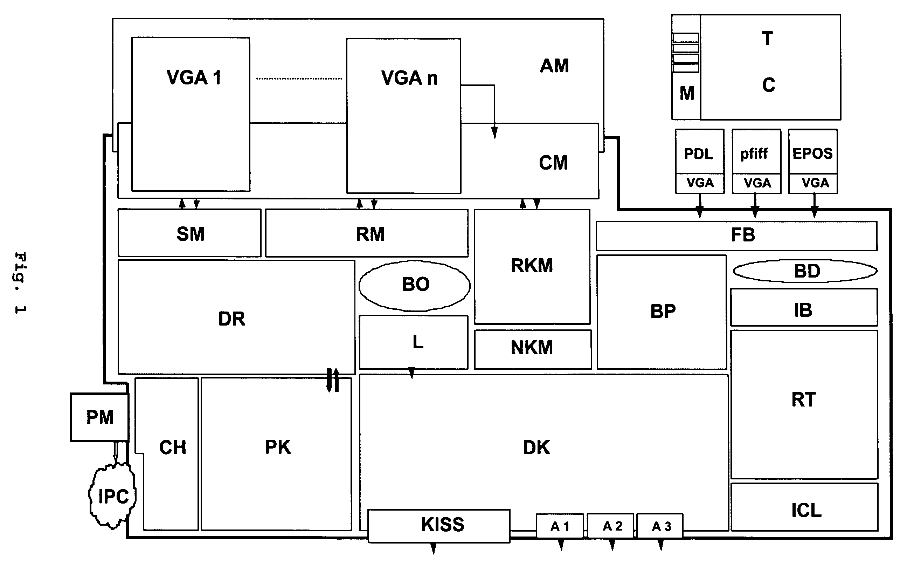

Die Adapterkomponente umfasst ferner entsprechende Adapter für den Online- und Offline-Zugriff auf Datensysteme. Ist beispielsweise ein Datensystem online ansprechbar, wird ein entsprechender Adapter bereitgestellt. Ist das Datensystem dagegen offline angebunden, ist ein Adapter für den Offline-Zugriff erforderlich. Für die Datenverbindung kann beispielsweise eine Middleware verwendet werden, so dass der Adapter direkt auf diese Middleware aufsetzt. Ist ein Datensystem des Backends, wie in Fig. 1 dargestellt, über eine Benachrichtigungskomponente KISS mit dem Frontend verknüpft, wird für den Zugriff auf dieses Datensystem ebenfalls ein eigener Adapter in der Adapterkomponente bereitgestellt. Dabei kann ebenfalls eine Middleware verwendet werden.

### Application-Manager AM

Der Application-Manager erstellt und initialisiert im Verlauf des Systemstarts alle Objekte, die für den Betrieb von Carbon notwendig sind. Außerdem stellt er den grafischen Anwendungsrahmen in Form eines Hauptfensters mit den jeweiligen Kontrollmechanismen zur Verfügung.

### Bibliothek (Library)

Bibliotheken beinhalten die Grundfunktionalitäten des Carbon-Frameworks. Hierbei handelt es sich z. B. um Funktionalitäten wie Logging, ErrorHandling, Zugriff auf Systeminformationen etc.

Die Funktionalitäten in einer Bibliothek benötigen nicht die Infrastruktur eines Clients. Insbesondere kann jedes entsprechend konfigurierte Programm auf die Funktionalitäten einer Bibliothek zugreifen. Bibliotheken stehen zwar vorzugsweise nicht im direkten Dialog mit dem Anwender, können jedoch durchaus Elemente enthalten, die der Benutzeroberfläche zugeordnet werden. Dies sind dann Hilfsfunktionalitäten (Anzeige von Meldungen), die durch das Carbon-Framework, den Client oder durch Vorgangsbearbeitungsmodule genutzt werden.

### Carbon

Carbon bezeichnet eine Plattform, die vorzugsweise folgende Bestandteile enthält:
- Client
- Vorgangsbearbeitungsmodul
- Komponente
- Bibliothek (Library)

### Carbon-Client

Der Carbon-Client startet einzelne Funktionen/Applicationen. Mehrere Carbon-Clients können nebeneinander existieren.

Als Client kann grundsätzlich jedes Programm bezeichnet werden, welches das gesamte Carbon-Framework oder auch nur Teile davon nutzt. In erster Linie sind dies Programme, deren Zweck es ist, Vorgangsarten auszuführen. Allerdings können auch andere Programme, wie der Carbon-Host, der Dienste für andere Carbon-Clients zur Verfügung stellt, als Client bezeichnet werden.

### Carbon-Framework CF

Das Carbon-Framework bündelt vorzugsweise mehrere Module. Das Carbon-Framework ist zweckmäßigerweise ein API, welches die Funktionalitäten bereitstellt, Clients für Assistent-basierte Vorgangsarten zu erstellen.

Die im Rahmen des Carbon-Frameworks zur Verfügung gestellten Funktionalitäten, gruppieren sich vorzugsweise in vier Aufgabengebiete:
- Kernfunktionalitäten - Starten/Beenden des Clients, Starten/Stoppen bzw. Verwalten von Vorgangsarten,
- Vorgangsartenunterstützung (Masken, Datenhaltung, Ablaufsteuerung, etc.)
- Komponenten (Zugriff auf Daten, Drucken etc.)
- Bereitstellung von Basis-Funktionalitäten (Logging, ErrorHandling etc.)

### Carbon-Framework CF

Der Versand von Rohdaten ist eine zweckmäßige Verwendung des Carbon-Frameworks. Sämtliche Daten, die am Frontend erfasst werden, verschickt vorzugsweise das Carbon-Framework in Form von Rohdatensätzen an das Backend.

Ferner können als Datenverarbeitungsanlage Computer zur Steuerung von Verkaufautomaten, wie beispielsweise Briefmarkenautomaten, genutzt werden, wobei die Verkaufsautomaten vorzugsweise ebenfalls über Anzeige- und Eingabemittel verfügen, die mit dem Computer verbunden sind, welcher eine Speicher- und eine Prozessoreinheit aufweist.

Anhand der Carbon-Plattform können Transaktionen zudem über ein Netzwerk, wie beispielsweise ein lokales Netzwerk oder das Internet, abgewickelt werden. Die Plattform ist dabei auf einem Server-Computer installiert, der in einer dem Fachmann bekannten Weise über einen Client-Computer bedient wird, der in dem Netzwerk mit dem Server-Computer verbunden ist.

Zur Durchführung bzw. Bearbeitung von Prozessen enthält die Carbon-Plattform insbesondere Datenkomponenten, welche den Zugriff auf verschiedene Datenquellen und -senken steuern und zur Durchführung der Vorgänge benötigte Daten, wie beispielsweise Kundendaten bereitstellen, einen so genannten Carbon-Host (CH), welcher Basisdienste, wie beispielsweise Druckdienste oder einen Zugriff auf Eingabegeräte wie Handscanner oder Chipkartenleser, bereitstellt, sowie Komponenten, welche die bei der Bearbeitung eines Vorgangs erfassten und verarbeiteten Daten nachgeschalteten Systemen, wie beispielsweise Buchhaltungssystemen oder Systemen zur Datenhaltung, übergeben.

Prozesse werden innerhalb der Carbon-Plattform durch Vorgänge abgebildet, denen jeweils ein Vorgangsbearbeitungsmodul zur Durchführung der Vorgänge zugeordnet ist. Der modulare Aufbau ermöglicht es dabei, Prozesse in Teilprozesse zu gliedern, die Bestandteil einer Vielzahl von Prozessen sind. Durch dieses dem Fachmann bekannte Prinzip müssen Teilprozesse nur einmal als Vorgang implementiert werden und können bei der Bearbeitung eines Gesamtprozesses aufgerufen werden, ohne dass eine Implementierung in jedem Gesamtvorgang erforderlich ist.

Bei der Bearbeitung eines Prozesses werden somit in der Regel gleichzeitig mehrere einen Teilprozess abbildende Vorgänge durchgeführt, die jeweils mittels eines Vorgangsbearbeitungsmoduls abgearbeitet werden. Zur Verwaltung der verschiedenen Vorgangsbearbeitungsmodule verfügt die Carbon-Plattform über einen Context-Manager, der insbesondere auch zum Initialisieren der Vorgangsbearbeitungsmodule verwendet wird.

Eine besonders bevorzugte Ausführungsform des Carbon-Frameworks CF ist in Fig. 1 dargestellt.

Die Darstellung verdeutlicht eine besonders bevorzugte Dreiteilung des Carbon-Frameworks.

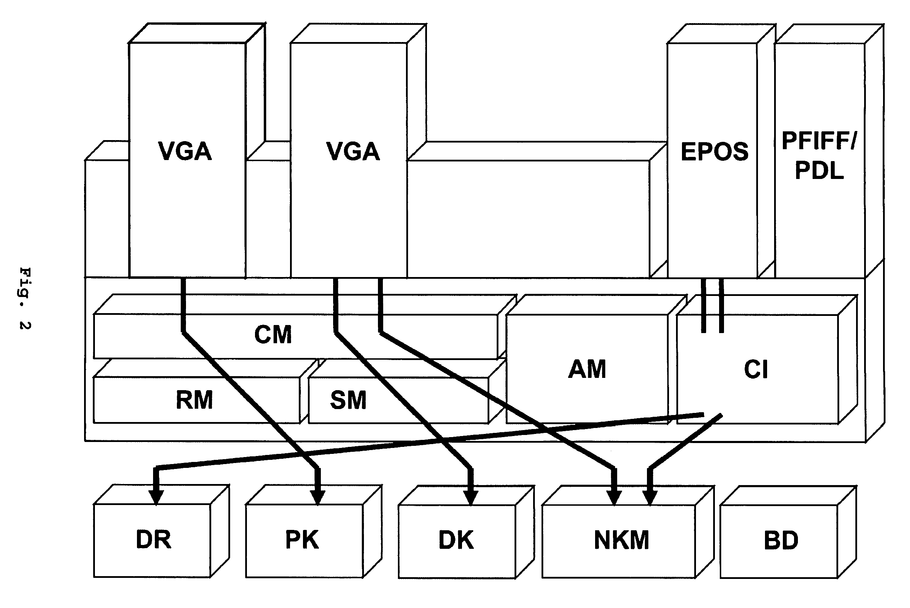

Die gewählte Darstellung zeigt, dass die - vorzugsweise parallel arbeitenden - Vorgangsbearbeitungsmodule VGA über Bestandteile des Carbon-Kerns (mittlere Ebene von Fig. 2) auf die in der untersten Ebene befindlichen Komponenten des Carbon-Frameworks zugreifen.

Bevorzugte Bestandteile der obersten Hierarchieebene des Carbon-Frameworks sind die vorzugsweise parallel betriebenen Vorgangsbearbeitungsmodule VGA sowie weitere Programmmodule, die vorzugsweise gleichfalls unabhängig voneinander betrieben werden können. Es kann sich jedoch gleichermaßen um Schnittstellen zu derartigen Programmen oder Programmmodulen handeln. Diese Programmmodule betreffen beispielsweise ein weiteres Transaktionssystem (EPOS) oder Programmbestandteile zum Erstellen vorgebbarer Routinen Pfiff und PDL.

Der in der mittleren Ebene angeordnete Context-Manager CM ist vorzugsweise als eine Schnittstelle ausgearbeitet, die einen Zugriff der Vorgangsbearbeitungsmodule auf einzelne Komponenten ermöglicht. In einer besonders bevorzugten Ausführungsform der Erfindung ist der Context-Manager eine Schnittstelle, die so ausgestaltet ist, dass sie weitere Schnittstellen beinhaltet.

Der Datenzugriff auf die Peripherie der in der untersten Systemebene angeordneten Komponenten kann unmittelbar über den Context-Manager oder über eine zusätzliche Einbeziehung von weiteren Systembestandteilen erfolgen.

Eine Einbeziehung eines Recovery-Managers RM hat den Vorteil, dass eine Datenspeicherung ermöglicht wird und somit Verarbeitungsvorgänge schnell wiederhergestellt werden können.

Der Einsatz eines Session-Managers SM hat den Vorteil, dass hierdurch eine Einbeziehung weiterer Daten ermöglicht wird. In einer besonders bevorzugten Ausführungsform des Session-Managers erfolgt dies dadurch, dass er ein Modul zur Verwaltung zusammenhängender Rohdatensätze enthält.

Ferner ist es zweckmäßig, dass der Kern einen Application-Manager AM sowie ein Schnittstellenmodul CI enthält.

In der Komponentenebene befinden sich vorzugsweise mehrere Komponenten, beispielsweise eine Druckkomponente DR, eine Peripheriekomponente PK, eine Datenzugriffskomponente DK, ein Kassenmodul NKM sowie ein Basisdienst BD.

Die dargestellte Ausführungsform weist zusätzlich den besonderen Vorteil auf, dass sie eine Integration bestehender Komponenten ermöglicht.

So ist es beispielsweise möglich, dass die zuvor dargestellten Programme der obersten Hierachieebene (EPOS; Pfiff/PDL) und/oder einzelne Komponenten, beispielsweise das Kassenmodul NKM aus anderen Applicationen übernommen wurden.

Somit ermöglicht es das erfindungsgemäß eingesetzte Framework, bestehende Programmmodule zu integrieren und eine schnelle Implementierung erfindungsgemäßer Bestandteile auch innerhalb bestehender Systeme zu ermöglichen.

### Carbon-Host CH

Der Carbon-Host ist ein Host-Modul, das andere Module/ Services aktivieren, deaktivieren oder pausieren kann.

### Carbon-Kern

Der Bereich, in dem die Carbon-Kernfunktionalitäten umgesetzt werden, wird als Carbon-Kern bezeichnet.

Der Carbon-Kern besteht vorzugsweise aus mehreren Komponenten. Beispiele für diese Komponenten sind:
Epos.Application, Carbon.Context, Carbon.Recovery und Carbon.Session.

Es ist besonders vorteilhaft, dass diese Komponenten zur Durchführung folgender Funktionen ausgestattet sind:
- Epos.Application -: Start der Anwendung, Initialisierung und Verwaltung des Anwendungsrahmens
- Carbon.Context -: Starten/Stoppen/Verwalten von Vorgangsarten, Hosten von Services, Steuerung Backup/Recovery.
- Carbon.Recovery -: Speichern und Verwalten der Daten für das Backup/Recovery
- Carbon.Session -: Verwalten von Sessions

Der Kern stellt somit die Grundfunktionalität des Carbon-Frameworks und des Clients dar. Da das Framework vorzugsweise aus einer Anzahl von passiven Assemblies besteht, gibt es einen zentralen Einstiegspunkt, der das Framework lädt und instanziiert.

Diese Aufgabe übernimmt zweckmäßigerweise ein Client.

Die EPOS.exe definiert den Eintrittspunkt in den EPOS-Client (Klasse EPOS.EntryPoint). Es wird der Application-Manager instanziiert, der Start des Frameworks eingeleitet und im weiteren Ablauf die Start-Vorgangsart geladen.

### Aufbau des Carbon-Kerns

Fig. 2 zeigt den Grundaufbau des EPOS-Clients. Die mittlere Schicht spiegelt den Kern des Frameworks wider.

### Carbon-Vorgangsart

Eine Vorgangsart stellt die systemtechnische Abbildung eines Verarbeitungsprozesses dar. Im Carbon-Framework werden an der Spezifikation und Erstellung von Vorgangsarten zweckmäßigerweise Rahmenbedingungen und Konventionen geknüpft.

Besonders bevorzugte Ausführungsformen der Vorgangsarten zeichnen sich durch das Vorhandensein eines oder mehrerer der nachfolgenden Merkmale aus:
- die Verwendung zur Verfügung gestellter Carbon-Komponenten (z. B. Vorgangsart-Steuerung);
- das Vorliegen auf einem Client in mehreren Versionen einer Vorgangsart;
- das vorzugsweise Ansprechen des Carbon-Frameworks immer mit der Version der höchsten Nummer;
- die strikte Trennung der Benutzeroberfläche in einer Vorgangsart von der Businesslogik, wobei im Carbon-Framework das MVC-Modell verwendet wird.

Eine Vorgangsart besteht in der Regel aus mehreren Masken. Die Navigation zwischen den Masken kann sowohl linear als auch nicht-linear sein.

Zur Gestaltung der Benutzeroberfläche stehen dem Vorgangsart-Programmierer GUI-Controls aus dem Carbon-Framework zur Verfügung.

Eine Vorgangsart kann aus einer anderen Vorgangsart heraus aufgerufen werden. Zwischen Vorgangsarten kann ein Datenaustausch in beide Richtungen stattfinden.

Eine Vorgangsart sollte serialisierbar sein, damit das Backup/Recovery-System des Carbon-Frameworks diese sichern kann.

Eine Vorgangsart kann Basisdienste nutzen.

Es ist besonders zweckmäßig, das Verfahren so durchzuführen, dass ein Ablaufplan des Vorgangsbearbeitungsmoduls in einer Konfigurationsdatei hinterlegt wird, welche beim Start eines Vorgangsbearbeitungsmoduls eingelesen wird.

Durch die unmittelbare Zuordnung von Daten zu den Vorgangsbearbeitungsmodulen ist es ferner möglich, dass neue Module hinzugefügt werden können, beziehungsweise dass einzelne Vorgangsbearbeitungsmodule entfernt werden können, ohne dass die Funktionsfähigkeit anderer Vorgangsbearbeitungsmodule beeinträchtigt wird.

In einer besonders bevorzugten Ausführungsform der Erfindung sind die Vorgangsbearbeitungsmodule mit wenigstens einem weiteren Datenmodul verbunden.

Das weitere Datenmodul enthält vorzugsweise solche Daten, die für eine Datenbearbeitung in mehreren Vorgangsbearbeitungsmodulen eingesetzt werden können.

Es ist besonders zweckmäßig, dass mehrere Vorgangsbearbeitungsmodule unabhängig voneinander Bearbeitungsvorgänge durchführen können.

Ein Beispiel einer derartigen parallelen Bearbeitung von Vorgängen wird nachfolgend anhand von Fig. 1 erläutert.

Bei der in Fig. 1 dargestellten Ausführungsform werden mehrere Vorgangsmodule VGA 1 bis VGA n parallel betrieben.

Jedes der Vorgangsbearbeitungsmodule enthält einen eigenen Datencontainer DC. Innerhalb der Datencontainer DC befinden sich Datenobjekte.

Durch geeignete Objekte, die vorzugsweise statuslos sind, werden Daten zu den Datencontainern DC übermittelt.

Die entsprechenden Objekte, die Daten in den Datencontainer transportieren beziehungsweise speichern, sind vorzugsweise Business-Objekte mit einer Business-Logik BL oder dem Backend zugeordnete weitere Business-Objekte mit einer Backend-Business-Logik BEB.

Diese Objekte sind zweckmäßigerweise über ein Presentermodul PM mit einem Workspace W des jeweiligen Vorgangsbearbeitungsmoduls verbunden. Ferner sind die Presentermodule mit einem entsprechenden Controller C verbunden.

Das Business-Objekt verarbeitet den Logon-Command, der vom Workspace ausgelöst wird. Die Methode Logon() führt alle Tätigkeiten aus, die im Rahmen der Anmeldung stattfinden. Es werden die Anwendungs-Session und die Benutzer-Session mittels des SessionIdCreator-Plug-in angelegt, falls diese nicht bereits existieren. Die verwendeten Session-IDs werden hierbei abhängig von der Client-ID gebildet. Die Session-Typen werden von der Klasse Epos.PlugIn.SessionConstants des CommonDataAccess-Plug-in bezogen. Die Anwendungs-Session ist die Parent-Session der Benutzer-Session.

Nach dem Anlegen der jeweiligen Session wird diese mit Daten befüllt. Die Schlüssel dafür werden ebenfalls aus der Klasse Epos.PlugIn.SessionConstants ermittelt. Die Daten für die Anwendungs-Session werden mittels des ApplicationSessionValuesDataService über Dataactions ermittelt. Dieses sind der Filialschlüssel, der Filialtyp, die Client-ID und der Arbeitsplatztyp. Die Benutzer-Session wird nur mit den Benutzerrollen befüllt. Diese sind in der Konfigurationsdatei der Vorgangsart in einer Zeichenkette abgelegt. Im Abschnitt configuration/settings findet sie sich unter dem Key UserRoles. Die einzelnen Rollen sind hier durch Komma getrennt angegeben. Diese Zeichenkette wird in der Benutzer-Session abgelegt.

Nachdem somit die Anwendungs-Session und die Benutzer-Session angelegt und initial befüllt wurden, beendet sich die Vorgangsart und startet die Folgevorgangsart (StopNew-Methode des IContent-Interfaces). Der Vorgangsartenschlüssel der Nachfolgevorgangsart wird aus der Konfigurationsdatei der Vorgangsart gelesen. Unter configuration/settings findet er sich im Key NextVga.

Zweckmäßigerweise sind wenige ausgewählte Bereiche des Vorgangsbearbeitungsmoduls, insbesondere der VGA-Workspace W mit einem Application-Manager AM verbunden.

### Context-Manager CM

Der Context-Manager hält Schnittstellen bereit, die eine Datenübertragung zwischen den Vorgangsbearbeitungsmodulen VGA 1 bis VGA n mit dem Backend ermöglicht.

Eine besonders bevorzugte Ausführungsform des Context-Managers CM zeichnet sich dadurch aus, dass er Schnittstellen bereit hält, die eine Datenübertragung zwischen dem Session-Manager und der Rohdatenkomponente ermöglichen können.

### Daten-Container DC

Die Daten-Container enthalten Elemente des durchzuführenden Verarbeitungsprozesses, das heißt, der Status einer Vorgangsart spiegelt sich in den konkreten Werten auf den Elementen im Daten-Container DC wider. Die Daten-Container DC ermöglichen einen Abgleich und Rückmeldung an die Business Objekte, wenn eine Änderung von Feldinhalten auf der GUI vorgenommen wird. Der Daten-Container DC kann jederzeit mit weiteren Werten belegt werden, so dass diese validiert werden können.

Eine besonders bevorzugte Ausführungsform der Erfindung sieht insbesondere vor, Eingabedaten der Retail Client Nutzer in einem Daten-Container DC in Elementen abzulegen.

Die Erfindung ermöglicht vielfache Ausgestaltungen von Transaktionssystemen. Ausführungsformen mit einer dezentralisierten Datenspeicherung sind wegen einer Erhöhung der Flexibilität und der Ausfallsicherheit besonders bevorzugt.

Die erfindungsgemäße Datenablage erhöht die Flexibilität des Systems und die Fehlersicherheit des Systems.

Eine besonders bevorzugte Ausführungsform der Erfindung zeichnet sich dadurch aus, dass in dem Vorgangsbearbeitungsmodul ein Datencontainer zum Speichern des Datenobjekts erzeugt wird.

Insbesondere ist es zweckmäßig, dass die Datenobjekte den Wert der Daten enthalten.

Vorteilhaft weist das Vorgangsbearbeitungsmodul neben einer oder mehreren Komponenten zur Erfassung und/oder Bearbeitung einen Datencontainer zum Speichern von Datenobjekten auf, die insbesondere den Wert der Daten enthalten. Der Datenbestand des Vorgangsbearbeitungsmoduls, der in Form der Datenobjekte vorliegt, kann somit in einfacher Weise gespeichert und, etwa nach einem Systemabsturz, wiederhergestellt werden.

Eine besonders umfassende Datensicherung sowie eine besonders einfache und zuverlässige Datenwiederherstellung lassen sich in einer besonders bevorzugten Ausführungsform der Erfindung dadurch erzielen, dass jedem Datenelement, das von dem Vorgangsbearbeitungsmodul erfasst und/oder verarbeitet wird, ein Datenobjekt zugeordnet wird.

Ferner ist es besonders zweckmäßig, dass der Datencontainer den gesamten Zustand eines Vorgangs enthält.

Vorzugsweise kann dabei jedem Datenelement, das von dem Vorgangsbearbeitungsmodul erfasst und/oder verarbeitet wird, ein Datenobjekt zugeordnet werden. Der Datencontainer enthält damit den gesamten "Zustand" eines Vorgangs. Der vollständige Vorgang kann somit besonders einfach gesichert und gegebenenfalls wiederhergestellt werden. Zur weiteren Erhöhung der Datensicherheit ist es zweckmäßig, dass die Datenobjekte neben den Daten zudem Eigenschaften der Daten enthalten.

Neben den Werten der Daten können die Datenobjekte zudem Eigenschaften der Daten enthalten, welche vorzugsweise Beschränkungen zugelassener Werte beschreiben. Dabei kann es sich bei Daten in einem Zahlenformat beispielsweise um Wertebereiche oder vorgegebene diskrete Zahlenwerte handeln oder es kann eine vorgegebene Minimal- und/oder Maximallänge einer Zeichenkette angegeben werden.

Die Ausführungen für Daten gelten auch für einzelne Datenelemente. Die Verwendung der Pluralform "Daten" stellt also keine Festlegung dar, sondern schließt jeweils ausdrücklich auch den Fall ein, dass es sich um ein einzelnes Datenelement handelt.

Das Datenbearbeitungsmodul kann damit schnell und einfach an geänderte Bedingungen angepasst werden, indem die in den Datenobjekten hinterlegten Eigenschaften angepasst werden.

Anhand der in dem Datencontainer enthaltenen Datenobjekte kann auch das Verhalten des Vorgangs vorgegeben werden. Die Konfiguration des Verhaltens ist somit weitgehend von Einstellungen in der Funktionseinheit des Vorgangsbearbeitungsmoduls entkoppelt, so dass die Funktionseinheit in hohem Maße auf Standardoperationen zurückgreifen kann, die für eine Vielzahl von Vorgängen durchgeführt werden.

Die Erfassung von Daten lässt sich innerhalb des Vorgangsbearbeitungsmoduls dadurch realisieren, dass Werte von bestehenden Datenobjekten verändert werden. Gleichfalls ist es jedoch auch möglich, neue Datenobjekte anzulegen und Werte in diese einzutragen. Zur Anzeige von Daten kann ebenfalls auf die Werte des Datencontainers zugegriffen werden.

Das Computersystem umfasst wenigstens zwei Datenquellen bzw. Datensenken. Bei einer Datenquelle handelt es sich um einen Ursprungsort, von welchem Daten geliefert werden. Bei einer Datensenke handelt es sich um einen Bestimmungsort für Daten und somit um eine Empfangsstelle. Die Übernahme von Daten erfolgt üblicherweise über eine standardisierte Schnittstelle. Bei den Datenquellen und Datensenken kann es sich beispielsweise um lokale Datenbanken, servergestützte Datenbanken, Anwendungsserver oder Umsysteme handeln. Derartige Datenquellen und Datensenken werden zur Vereinfachung im Folgenden allgemein als Datensysteme bezeichnet. Die Datensysteme können sowohl im Frontend als auch im Backend angeordnet sein. In dem in Fig. 1 dargestellten Ausführungsbeispiel ist ein erstes Datensystem dem Backend BE zuzuordnen, während zwei weitere Datensysteme dem Frontend FE zuzuordnen sind.

### Datenkomponente DK

Die Datenkomponente betrifft Datensätze, die mit einer Konfigurationsdatei verbunden sind. Die Konfigurationsdatei ermöglicht einen zentralen Zugriff auf lokal gespeicherte Daten.

In einer besonders bevorzugten Ausführungsform besteht die Datenkomponente aus einer Business-Schicht, einer technischen Verwaltungsschicht und einer technischen Adapterschicht. Die Datenkomponente steuert die Zugriffe auf lokale und im Backend angesiedelte Datenquellen. Hierzu besteht eine Schnittstelle zu KISS.

Mit Hilfe einer Rohdatenkomponente erzeugt die Vorgangsart Rohdatensätze. Der Context-Manager dient als Mittler, er gibt die Dienste der Rohdatenkomponente über die Schnittstelle IRDSManager an die Vorgangsart weiter.

Die Datenkomponente stellt vorzugsweise eine Komponente eines Frameworks dar, welche von anderen Komponenten genutzt werden kann. Beispielsweise kann die Datenkomponente von der Rohdatenkomponente genutzt werden, welche die erste Erfassung von Datenmaterial in Form einer Urliste (raw data) verarbeitet.

Ferner ist es zweckmäßig, dass das Transaktionssystem ein Steuerungsmodul enthält, das so ausgestaltet ist, dass es den Daten-Container aktivieren und/oder deaktivieren kann.

Die erfindungsgemäße Datenkomponente DK umfasst zweckmäßigerweise wenigstens eine Funktionskomponente FK, eine Zugriffskomponente ZK und eine Adapterkomponente AK.

Die bevorzugte Datenkomponente weist in einer besonders bevorzugten Ausführungsform drei Schichtebenen auf. Die oberste Schichtebene ist als Business-Schicht (BLA) ausgebildet. Hierunter befindet sich eine technische Verwaltungsschicht (Data Service Layer-SL).

Mit Hilfe der Datenkomponente wird das Verfahren wie folgt durchgeführt:

In einer Filiale eines Filialsystems ist jeder einzelnen in der Filiale angebotenen Dienstleistung ein Geschäftsvorgang zugeordnet, für den eine programmtechnische Entsprechung in dem IT-System vorgesehen ist.

Der Mitarbeiter in der Filiale nimmt die Kundenwünsche entgegen und erfasst Kundendaten, Kundenwünsche und so weiter, beispielsweise mit Hilfe einer grafischen Benutzungsoberfläche, die den Mitarbeiter bei der vollständigen Eingabe aller erforderlichen Angaben unterstützt. Der Arbeitsplatz, an dem der Mitarbeiter diese Tätigkeiten ausführt, wird häufig auch als Frontend bezeichnet.

Die auf diese Weise erfassten Kundenwünsche und Kundendaten werden zu einer tiefer liegenden Komponente, beispielsweise einer Infrastrukturschicht des Datenverarbeitungssystems, weitergegeben. Die Infrastrukturschicht kümmert sich eigenständig um die Steuerung von peripheren Komponenten, ohne dass der Mitarbeiter in die Abläufe eingreifen müsste. Zum Beispiel werden Druckaufträge automatisch an einen Fahrschein- oder Belegdrucker weitergeleitet oder eine automatische Kasse wird zur Ausgabe eines bestimmten Geldbetrages veranlasst.

Alle diese Vorgänge werden in einem Hintergrundsystem (Backend) protokolliert und Kundendaten werden gespeichert. Darüber hinaus werden in dem Hintergrundsystem, das auch als Filial-Backend bezeichnet wird, Daten gespiegelt und archiviert, um die Grundsätze ordentlicher Buchführung zu verwirklichen. Das Frontend, die Infrastrukturschicht und das Filial-Backend bilden wichtige Bestandteile des Filialsystems.

Schließlich ist es für einige Geschäftsvorgänge erforderlich, dass das Filialsystem Daten mit anderen Systemen austauscht, zum Beispiel mit der Datenbank eines Bankrechners, um festzustellen, ob die von einem Kunden gewünschte Barauszahlung auf seinem Konto überhaupt gedeckt ist. Solche Systeme außerhalb einer Filiale sind Beispiele für Umsysteme. Die Übertragung einer solchen Abfrage wird ebenfalls von dem Filial-Backend ohne Eingriffe des Mitarbeiters selbsttätig ausgeführt.

Werden Daten von den Umsystemen zurück übertragen, werden sie von dem Filial-Backend, der Infrastrukturschicht bis zum Frontend des Mitarbeiters übertragen, damit dieser dem Inhalt der Daten entsprechend aktiv wird. In dem vorliegenden Beispiel würde er also den gewünschten Geldbetrag auszahlen, falls hierfür die entsprechenden Berechtigungsdaten vorliegen.

Der Datenaustausch zwischen den einzelnen Schichten des Filialsystems und den Umsystemen sind in Figur 2 durch Pfeile angedeutet.

### KISS

### Benachrichtigungskomponente KISS (Komponenten-Infrastruktur-Service)

Die Benachrichtigungskomponente ermöglicht eine Auswahl von Übertragungswegen zum Übermitteln von Benachrichtigungen.

Zweckmäßigerweise wird die Benachrichtigungskomponente so ausgestaltet, dass sie ein Auswahlmittel zur Auswahl eines Übertragungskanals mit einer für den jeweiligen Übertragungszweck geeigneten Datenrate und/oder sonstigen übertragungsrelevanten Eigenschaften wie beispielsweise der erzielbaren Datensicherheit enthält.

Eine zweckmäßige Weiterbildung der Benachrichtigungskomponente KISS beinhaltet das "Mitnehmen" von Daten niedrigerer Priorität bei einem für eine Übertragung von Daten höherer Priorität bereits geöffneten Übertragungskanal.

Zweckmäßigerweise erfolgt die Zuweisung des Übertragungskanals anhand von Informationen über die zu übermittelnden Daten.

Es ist besonders zweckmäßig, dass die beiden Übertragungskanäle sich in wenigstens einem Merkmal voneinander unterscheiden.

Beispielsweise ist einer der Übertragungskanäle schneller als wenigstens einer der anderen Übertragungskanäle, beispielsweise durch Vorsehen einer schnellen Online-Verbindung mit entsprechend schnellen technischen Übertragungsmitteln, vorzugsweise zu einer Online-Datenübertragung, zum Beispiel ein DSL-Kanal, ein Glasfasernetzwerk, ein WLAN-Netz, eine GPRS-Verbindung oder eine UMTS-Verbindung.

Andere Kriterien, durch die sich wenigstens einer der Übertragungskanäle auszeichnet, können beispielsweise die Menge der übertragbaren Daten oder die eingesetzte Art der Benachrichtigung sein.

Ein besonderer Vorteil der dargestellten Benachrichtigungskomponente KISS ist, dass andere Komponenten der Zielarchitektur die Funktionalität von KISS unabhängig von der internen Funktionsweise von KISS nutzen können.

Eine besonders bevorzugte Ausführungsform des Transaktionssystems zeichnet sich dadurch aus, dass wenigstens ein Teil der Vorgangsbearbeitungsmodule und wenigstens eine der Dienstkomponenten durch die Benachrichtigungskomponente über wenigstens zwei Übertragungskanäle verbindbar sind, dass die Benachrichtigungskomponente ein Mittel zur Zuweisung eines der Übertragungskanäle aufweist und dass das Mittel zur Zuweisung des Übertragungskanals so ausgestaltet ist, dass es die Zuweisung anhand von Informationen über die zu übermittelnden Daten vornehmen kann.

Eine besonders bevorzugte Ausführungsform der Benachrichtigungskomponente zeichnet sich dadurch aus, dass es mehrere (beispielsweise drei) Möglichkeiten gibt, Daten zu versenden (Remote; Offline-Weg; Online-Anfrage) und dass KISS eine Optimierung des Übertragungsweges vornimmt. Hierdurch werden erhebliche Übertragungskosten gespart. Dies geschieht auch dadurch, dass bei der Online-Anfrage auch für den Offline-Weg bestimmte Daten "mitgenommen" werden.

Dies erfolgt zweckmäßigerweise dadurch, dass bei einer Übertragung von Daten überprüft wird, ob der zugewiesene Übertragungskanal so beschaffen ist, dass er eine Mitübermittlung von weiteren Daten als den ursprünglich zugewiesenen Daten ermöglicht.

Dies hat den Vorteil, dass ein Mitnehmen von Daten erfolgt, die eigentlich nicht für eine Übertragung vorgesehen sind, wobei das Mitnehmen jedoch den für die Übertragung der anderen Daten bereits geöffneten Übertragungskanal mitnutzt, soweit der Übertragungskanal und/oder seine Übertragungsparameter (Übertragungskapazität, Datenvolumen) ein derartiges Mitübertragen zulässt.

Hierbei ist es besonders vorteilhaft, dass bei einer Übertragung von Daten mit einer hohen Priorität für die Datenübertragung überprüft wird, ob Daten vorhanden sind, die eine niedrigere Priorität aufweisen, gleichfalls über den für die Übertragung der Daten hoher Priorität zugewiesenen Übertragungskanal übertragen werden können.

Es ist besonders zweckmäßig, dass Übertragungskanäle sich in wenigstens einem Merkmal voneinander unterscheiden. Beispielsweise ist einer der Übertragungskanäle schneller als wenigstens einer der anderen Übertragungskanäle, insbesondere durch Vorsehen einer schnellen Online-Verbindung mit entsprechend schnellen technischen Übertragungsmitteln, vorzugsweise zu einer Online-Datenübertragung, zum Beispiel ein DSL-Kanal, ein Glasfasernetzwerk, ein WLAN-Netz, eine GPRS-Verbindung oder eine UMTS-Verbindung.

Diese Ausführungsform der Erfindung hat den Vorteil, dass unterschiedliche Daten auf verschiedene Weise verarbeitet und/oder übertragen werden können.

Ein weiterer Vorteil der eingesetzten Benachrichtigungskomponente ist, dass eine flexible Anpassung an unterschiedliche Eigenschaften der Daten ermöglicht wird.

Insbesondere ist es hierdurch auch möglich, das Verfahren besonders flexibel durchzuführen, beziehungsweise die Benachrichtigungskomponente und/oder das Datenübertragungssystem anpassbar auszugestalten.

Insbesondere ist es möglich, durch Veränderungen von Eigenschaften des Mittels zur Zuweisung des Übertragungskanals Übertragungsparameter für Vorgänge des Datenübertragungssystems Datenübertragungen für eine Vielzahl von Endgeräten (beispielsweise in mehreren Endgeräten und/oder in mehreren Filialen (teilweise mehrere tausend oder zehntausend) durch Änderung an einem einzelnen Mittel oder wenigen ausgewählten Mitteln zur Zuweisung des Übertragungskanals zu verändern.

Eine zweckmäßige Ausführungsform des Datenübertragungssystems, der Benachrichtigungskomponente und des Verfahrens zum Übertragen von Daten zeichnet sich dadurch aus, dass das Mittel zum Verbinden der Daten mit den Informationen über die Anforderungen für den zuzuweisenden Übertragungskanal die Informationen über die Auswahlkriterien in eine mit den Daten verbindbare Konfigurationsdatei einbringt.

Hierdurch ist es möglich, schnell und vereinheitlichbar auf die Anforderungen an die Datenübertragung zuzugreifen und eine Datenübertragung entsprechend dieser Anforderungen vorzunehmen beziehungsweise eine Entscheidung über eine gezielte Übertragung der Daten zu einem späteren Zeitpunkt oder über einen anderen Übertragungskanal vorzunehmen.

Eine besonders bevorzugte Ausführungsform des Datenübertragungssystems, der Benachrichtigungskomponente und des Verfahrens zum Übertragen von Daten zeichnet sich dadurch aus, dass das Mittel zum Verbinden der Daten mit den Informationen über die Auswahlkriterien für den zuzuweisenden Übertragungskanal die Daten in einen virtuellen Briefumschlag einbringt und diesen mit den Informationen über die Auswahlkriterien für den zuzuweisenden Übertragungskanal verbindet.

Ein derartiger virtueller Briefumschlag ist mit dem Vorteil verbunden, dass Dateninhalte von äußeren Anforderungen an die Datenübertragung leicht entkoppelt werden können. Außerdem ist hierdurch eine weitere Erhöhung der Datensicherheit erzielbar.

Eine zweckmäßige Ausführungsform des Datenübertragungssystems, der Benachrichtigungskomponente und des Verfahrens zum Übertragen von Daten zeichnet sich dadurch aus, dass die Benachrichtigungskomponente ein Mittel zum Erfassen von Informationen über Auswahlkriterien für einen zuzuweisenden Übertragungskanal enthält, dass die Benachrichtigungskomponente so beschaffen ist, dass sie eine Datenübertragung durch Übertragungskanäle vornehmen kann, und dass die Benachrichtigungskomponente anhand der Informationen über die Auswahlkriterien für einen zuzuweisenden Übertragungskanal den Übertragungskanal zuweist.

Eine besonders bevorzugte Ausführungsform des Datenübertragungssystems, der Benachrichtigungskomponente und des Verfahrens zum Übertragen von Daten zeichnet sich dadurch aus, dass anhand von Eigenschaften der Daten eine Zuweisung eines Übertragungskanals für die Übermittlung der Daten erfolgt.

Erfindungsgemäß wird eine Differenzierung zwischen verschiedenen Datenkategorien vorgenommen.

Die vorgenommene Differenzierung zwischen verschiedenen Datenkategorien ermöglicht eine Vergrößerung der Einsatzmöglichkeiten der Daten, zum Beispiel bei komplizierten Datenbanksystemen oder Systemen mit einer Vielzahl von vernetzten Endgeräten, beispielsweise Fahrkarten- oder Bankautomaten.

Die Benachrichtigungskomponente KISS ermöglicht die Verknüpfung des Filial-Frontends mit dem Filial-Backend und ist im Filial-Backend für die Kommunikation der Services untereinander zuständig. KISS lagert unter anderem im Filial-Frontend und ist dort mit der Carbon-Datenkomponente durch eine Schnittstelle verbunden. Das Filial-Backend verfügt über einen KISS Gegenpart. Die KISS-interne Datenübertragung basiert dabei vorzugsweise auf XML und/oder SOAP. Eine Verknüpfung von Rechnern kann grundsätzlich über einen langsamen Nachrichtenweg oder eine schnelle Verbindung hergestellt werden. Die Besonderheit von KISS besteht darin, eine Symbiose erreicht zu haben. KISS ist in der Lage, ankommende Daten zu sortieren, d.h. den Daten den einen oder einen anderen Weg zuzuweisen. Für den langsamen Nachrichtenweg setzt KISS beispielsweise die KommunikationsMiddleware Riposte ein, während die schnellere Verbindung über das Remote-Übertragungssystem hergestellt wird.

Die Erfindung eignet sich insbesondere für einen Einsatz der Übertragung unterschiedlicher Datensätze. Eine besonders bevorzugte Ausführungsform ist eine Datenkomponente.

Die Datenkomponente betrifft Datensätze, die mit einer Konfigurationsdatei verbunden sind. Die Konfigurationsdatei ermöglicht einen zentralen Zugriff auf lokal gespeicherte Daten.

In einer besonders bevorzugten Ausführungsform besteht die Datenkomponente aus einer Business-Schicht, einer technischen Verwaltungsschicht und einer technischen Adapterschicht. Die Datenkomponente steuert die Zugriffe auf lokale und im Backend angesiedelte Datenquellen. Hierzu besteht eine Schnittstelle zu KISS.

### Komponenten

Eine Komponente ist eine Sammlung von Funktionalitäten, die vorzugsweise als separate programmtechnische Einheit gefasst ist. Komponenten können durch den Carbon-Kern, Vorgangsarten und durch andere Komponenten verwendet werden, um bestimmte Aufgaben (Beispiel: Verwalten von Kundendaten) durchzuführen. Ziel bei der Verwendung von Komponenten ist es, die redundante Entwicklung von Funktionalitäten zu vermeiden, indem mehrere Vorgangsarten auf die gleiche Komponente zugreifen können.

Komponenten sind vorzugsweise keine eigenständigen Programme und benötigen zu ihrer Ausführung die Infrastruktur eines Clients. Vorzugsweise enthält eine Komponente keine Elemente, die der Benutzeroberfläche zugeordnet werden. Komponenten stehen vorzugsweise nicht im direkten Dialog mit dem Anwender, sondern werden über Vorgangsarten oder andere Komponenten aufgerufen.

Vorzugsweise ist die Carbon-Komponente eine Deployment-Einheit, die Funktionalitäten und eine Factory enthält. Die Carbon-Komponente ist unabhängig zu sehen von sonstigen Komponenten. Die Factory liefert Informationen über die Carbon-Komponente und ermöglicht es so, eine Konsistenz- und Vorbedingungsprüfung durchzuführen und liefert damit Objektinstanzen eines angeforderten Typs.

Durch diesen Aufbau ist es möglich, auf einheitlichem Wege Objektinstanzen zu erstellen. Da in der Regel ein Interface von der Factory angefordert wird, kann die Klasse, die von der einen Instanz generiert wird, problemlos geändert oder ausgetauscht werden.

Die Factory ermöglicht es, die Bedingungen zu überprüfen, die zur Benutzung der Komponente erfüllt sein müssen, ohne dafür Instanzen der Klassen der Komponente erzeugen zu müssen. Hierfür sind Methoden zur Konsistenz- bzw. zur Vorbedingungsprüfung zu implementieren.

Die Eigenschaft Version liefert die Version der Komponente. Die Eigenschaft Domain liefert die Domain der Komponente. Mit der Methode CheckConsistency wird eine Konsistenzprüfung durchgeführt und mit der Methode CheckPrerequisites wird eine Vorbedingungsprüfung durchgeführt. Objektinstanzen werden je nach übergebener Type von der Methode GetInstance erzeugt. Die Klasse, die die Schnittstelle ICmpFactory implementiert, wird mit Hilfe des CmpFactoryAttribute im Assembly angegeben. Über dieses Attribut kann per Reflection eine Instanz der Schnittstelle ICmpFactory bezogen werden. Es existiert eine abstrakte Klasse StandardCmpFactory, die das Interface ICmpFactory implementiert. Ein vereinfachter Zugriff auf Objektinstanzen einer Komponente ist mit Hilfe der Klasse CmpSupport möglich.

### Konfigurationsdatei

Erfindungsgemäß ist eine Konfigurationsdatei in die Funktionskomponente einlesbar, wobei die Konfigurationsdatei fachliche Informationen für die Zugriffe auf die Datensysteme enthält. Die Konfigurationsdatei liegt vorzugsweise im XML-Format vor und initiiert eine Klasse *DataService* zur Kapselung aller Datenzugriffe. Die Funktionskomponente bildet die fachlichen Inhalte der Vorgangsbearbeitungsmodule ab, wobei beispielsweise in der Konfigurationsdatei hinterlegt ist, in welcher Datenquelle vom Vorgangsbearbeitungsmodul benötigte Daten gespeichert sind oder in welcher Datensenke durch das Vorgangsbearbeitungsmodul erfasste Daten hinterlegt werden. Ferner erfolgt die Validierung von Eingabe- und Ausgabewerten durch die Funktionskomponente. Auch die Zusammenführung von Daten aus mehreren Datensystemen wird durch die Funktionskomponente durchgeführt. Technische Details für den Zugriff auf die Datensysteme sind in der Funktionskomponente vorzugsweise nicht enthalten.

### Middleware

Bei der Middleware handelt es sich um eine anwendungsunabhängige Komponente, welche Dienstleistungen zur Vermittlung zwischen Anwendungen anbietet. Eine Middleware stellt eine Ebene in einem komplexen Software-System dar, die als Dienstleister anderen ansonsten entkoppelten Softwarekomponenten die Kommunikation untereinander ermöglicht.

### Model View Controller

Der Model View Controller sorgt für die Trennung von Benutzeroberfläche, Daten und Prozessen.

### Peripherie-Komponente PK

Über die Peripherie-Komponente steuert Carbon die Peripherie direkt an. Eine eigens programmierte Schnittstelle ermöglicht den Anschluss eines jeden Geräts, das die von Carbon vorgegebenen Eigenschaften enthält.

### Recovery-Manager RM

Der Recovery-Manager speichert den Stand des Clients in regelmäßigen Abständen.

### Rohdatenkomponente

Mit Hilfe der Rohdatenkomponente erzeugt die Vorgangsart Rohdatensätze. Der Context-Manager dient als Mittler, er gibt die Dienste der Rohdatenkomponente über die Schnittstelle IRDSManager an die Vorgangsart weiter.

### Session-Manager SM

Der Session-Manager SM beinhaltet zweckmäßigerweise ein Modul zur Verwaltung von Rohdatensätzen. Vorzugsweise hängen die Rohdatensätze zusammen. Der Einsatz des Session-Managers SM dient vorteilhafterweise dazu, eine Einbeziehung weiterer Daten, insbesondere der Rohdaten, zu ermöglichen.

Der Session-Manager verwaltet zusammenhängende Rohdatensätze, die in CARBON erstellt, geschachtelt und übergreifend zur Verfügung gestellt werden können.

### Session-Objekt

Ein Session-Objekt dient als VGA- übergreifendes Objekt für unterschiedlichste fachliche Sessions mit ihren Daten. Das Session-Objekt wird durch die Session-ID eindeutig gekennzeichnet, eine VGA kann sich, indirekt über das SessionIDCreator-Plugin, vom Session-Manager ein Session-Objekt mit frei definierbarem Typ (Bsp.: Kunden, Rechnung, Barzahlung, usw.) erstellen lassen. Dieses Objekt kann beliebige Session-Daten (Name-Value-Paare) aufnehmen, die dann von den anderen VGAs gelesen werden können.

Die Session-Daten werden in einer Datenbank persistiert. Bei Änderung von Session-Daten wird der zugehörige Record sofort aktualisiert. Aus Performance-Gründen werden die Session-Daten für Lesevorgänge im Session-Objekt gespeichert.

### DBAccess

Die Klasse DBAccess kapselt sämtliche Zugriffe auf die Session-Datenbank, sie stellt die gesamte Funktionalität zum Erzeugen, Schreiben, Lesen und Löschen von Session-Records bereit.

Von den Dataservices erbt die Klasse die Konfigurierbarkeit und die Unabhängigkeit von der eigentlichen Datenquelle. Sämtliche Datenbankzugriffe sind über die DataServices (siehe WIP) realisiert.

### Persistierung der Session-Daten

Die Session-Daten werden in einer lokalen Datenbank in der Tabelle Session abgelegt. Sämtliche Session-Daten werden in einen Stream serialisiert und in einem BLOB-Feld gespeichert, bei der Datenbank hat ein BLOB-Feld den Typ Image.

Eine bevorzugte Ausführungsform der Tabelle hat folgenden Aufbau:

**Tabelle 1 - Schema Session-Tabelle**

| **Feld** | **Beschreibung** |
|---|---|
| ID | Integer, eindeutige aufsteigende Nummer |
| Session-ID | ID String, Unique Key |
| Session-TransactionKey | GUID, kennzeichnet Session-Records die zu einer Records die zu einer Transaktionsklammer gehören, oder leere GUID, wenn keine Transaktion gestartet wurde. |
| Session-Name | String, aussagekräftige lesbare Beschreibung zur Identifikation der Workstation, des Benutzers und weiterer Informationen |
| Session-Type | String, Typ der Session ("Program", "User", ...) |
| Session-Parent | String, Session-ID vom Parent, bei der Root-Session die eigene Session-ID |
| Session-Content | Image, serialisierte Session-Daten |

Für jedes Session-Objekt existiert ein zugeordneter Datensatz. bei Änderung von Session-Daten wird der Datensatz sofort aktualisiert. Eine weitere Instanz eines Session-Objekts (gleiche Session-ID) wird immer auf Basis des vorhandenen Records erzeugt.

### Sequenzdiagramme

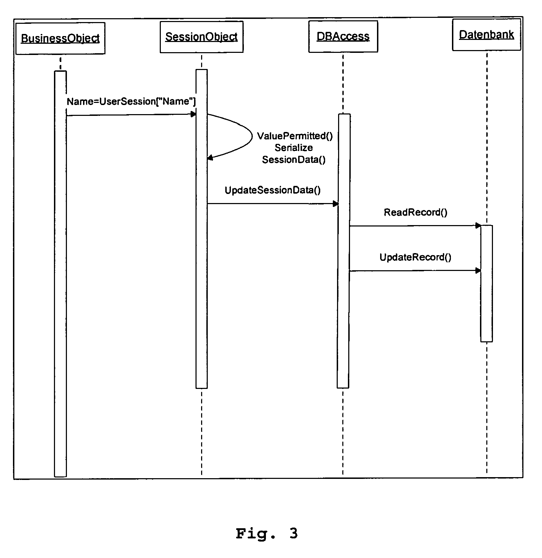

Die in den Fig. 3, 4 und 5 dargestellten Sequenzdiagramme beschreiben jeweils den Ablauf beim Zugriff auf Session-Daten, die Erstellung einer weiteren Session-Objekt-Instanz und die Transaktionsunterstützung beim Session-Handling.

### Zugriff auf Session-Daten

Beim Schreiben von Session-Daten erfolgt immer eine sofortige Aktualisierung der Datenbank.

Beim Lesen von Session-Daten verwendet das Session-Objekt intern gespeicherte Daten.

### Rohdaten

Der Versand von Rohdaten ist eine der wichtigsten Aufgaben des CARBON-Frameworks. Möglichst viele der Daten, die am Frontend erfasst werden, verschickt das CARBON-Framework in Form von Rohdatensätzen an das Backend. Insbesondere ist es vorteilhaft, dass auf diese Weise sämtliche Daten in Form von Rohdatensätzen verschickt werden. Die Steuerung des Rohdatenversands wird innerhalb der Vorgangsart im BusinessObjekt implementiert. Die Funktionalitäten des Rohdatenversands werden im Wesentlichen durch das Zusammenwirken folgender Bestandteile realisiert:

RdItemFilter, RdSender, SendDataManager, RdManager, RdItemList, RdItemFragment und RdItem.

Wie alle Dienstleistungen (Service-Pattern) innerhalb von Carbon wird auch das Versenden von Rohdaten den Vorgangsarten über Dienste zur Verfügung gestellt. Die Schnittstelle, die den Zugang hierfür bereitstellt, heißt IRdManager und wird im RdManager bzw. RdItemFilter implementiert.

Nachfolgend werden besonders bevorzugte, am Rohdatenversand beteiligten Objekte näher erläutert.

### Bestandteile:

### RdManager (IRdManager, IRdCollectionHandler)

Der RdsManager wird im Rahmen des Rohdatenversands nicht direkt instanziiert und benutzt. Seine Funktionalitäten stellt er den Vorgangsarten über die Schnittstellen IRdsManager und IRdCollectionHandler (Service-Pattern) zur Verfügung. Der RdsManager wickelt den eigentlichen Versand der Rohdaten ab, indem er die Verbindung mit dem Backend über DataServices aufbaut. Bevor die Daten verschickt werden, müssen die temporären Schlüssel der Rohdatensätze durch fortlaufende Schlüssel (GOB-Fähigkeit) ersetzt werden, die in einer Datenbank persistiert sind.

### RdItemList

Die RdItemList bildet die Schnittstelle zu den Sessions und den RdItems. Über diese Klasse können Rohdatensätze sowohl als XmlElement gespeichert als auch unter der Nutzung des RdsManagers zum Backend geschickt werden. Mit Hilfe der RdItemList werden Zugriffe auf Sessions und auch Details im Umgang mit RdItems vor den Vorgangsartenentwicklern verborgen.

### RdItem

Beim RdItem handelt es sich um eine Klasse. In erster Linie dient sie der Verwaltung eines XML-Elementes, das den eigentlichen Rohdatensatz repräsentiert. Die öffentliche Schnittstelle dieser Klasse ermöglicht das Lesen/Setzen des Xml-Inhaltes, das Lesen/Setzen der Schlüsselinformationen des Rohdatensatzes sowie die Validierung gegen das zu dem gekapselten Rohdatensatz gehörende XML-Schema.

### RdItemBase

Die Klasse RdItemBase ist die gemeinsame Basisklasse der Klassen RdItem und RdItemFragment. Sie stellt die Methoden zum Lesen und Schreiben von Werten in der XML-Struktur der Rohdaten über XPath-Lokalisierung zur Verfügung. Der Konstruktor liest die XML Struktur aus einer Templatedatei ein.

### RdItemFragment

Beim RdItemFragment handelt es sich um eine Klasse. In erster Linie dient sie der Verwaltung eines Xml-Elementes, das einen vorgangsartenspezifischen Teil eines Rohdatensatzes repräsentiert. Die öffentliche Schnittstelle dieser Klasse ermöglicht das Lesen/Setzen des Xml-Inhaltes und das Lesen/Setzen der Session-ID der Vorgangsart des Rohdatensatzfragmentes.

### RdItemFilter(IRdManager)

Der RdItemFilter implementiert wie der RdManager das Interface IRdManager. Er bietet die Möglichkeit, Rohdaten bestimmter Vorgangsarten vom Versand auszuschließen. Der RdItemFilter wird beim Anfordern eines IRdManager-Services zurückgeliefert und ist dem RdManager vorgeschaltet. Der RdItemFilter hält die nicht zu verarbeitenden Rohdaten zurück und übergibt die übrigen Daten an den RdManager, der nun die eigentliche Verarbeitung übernimmt.

### RdSender

Der RdSender ist verantwortlich für die Vorbereitung der durch den RdManager aufbereiteten RdItems für den Versand über KISS. D.h. der RdSender verpackt die ihm übergebenen RdItems in einen KissEnvelope und ergänzt diesen mit Priorität und Routing-Informationen. Anschließend wird der KissEnvelope an den SendDataManager für den Versand über KISS übergeben.

### SendDataManager

Der SendDataManager ist für die Steuerung des Versands von Rohdaten an das Backend über KISS verantwortlich. Darüber hinaus bietet er die Möglichkeit, die in einem bestimmten Zeitraum eingestellten KissEnvelopes zurückzugeben. Durch den RdSender werden ihm KissEnvelopes übergeben.

Die an den SendDataManager übergebenen Envelopes werden nicht direkt versendet, sondern zunächst in der Datenbank des Clients abgelegt. Ist in der Datenbank eine bestimmte Menge an nicht versendeten Envelopes aufgelaufen oder wird ein Envelope mit der Priorität "Sofortversand" eingestellt, so werden alle noch nicht versendeten Envelopes in der Datenbank als KissBundleEnvelope über KISS verschickt.

Der SendDataManager ist als ein technischer Basisdienst implementiert und als solcher für jede Vorgangsart verfügbar.

Der SendDataManager kann durch Vorgangsarten angesteuert werden. Aus diesem Grund wird er wie beispielsweise der Service IContent als technischer Basisdienst realisiert.

Jeder technische Basisdienst wird über die Methode GetService der Site der Vorgangsart bezogen. Der Zugriff auf einen technischen Basisdienst erfolgt nicht direkt, sondern über das zugehörige Interface. In diesem Fall lautet der Name des Interfaces ISendDataManager.

Nachdem die KISS-Envelopes vom RdSender an den SendDataManager übergeben wurden, werden diese in der CARBON-Datenbank des EPOS.neu-Clients in der Tabelle "KissEnvelopes" abgelegt und mit einem Einstelldatum versehen. Wird in der Carbon-Datenbank eine bestimmte Menge (in Bytes) an nicht versendeten KISS-Envelopes erreicht, so werden alle noch nicht versendeten KISS-Envelopes als KISS-Bundle-Envelope über KISS verschickt. Das Verschicken der KISS-Envelopes geschieht nicht einzeln, sondern in Bundle-Envelopes (wird mit Hilfe der KissHelper realisiert), die mehrere Einzel-Envelopes beinhalten. Wird ein KISS-Envelope mit der Priorität "Sofortversand" in der Carbon-Datenbank abgelegt, so werden ebenfalls alle noch nicht versendeten KISS-Envelopes über KISS in einem KISS-Bundle-Envelope verschickt.

Es ist zweckmäßig, wenn ein Erstellen von Bundle-Envelopes und/oder das Verschicken über die Benachrichtigungskomponente nur dann ausgelöst werden, wenn wenigstens eines der folgenden Ereignisse vorliegt:
- Die Gesamtgröße in Bytes aller in der Tabelle gespeicherten Envelopes übersteigt eine konfigurierbare Schwellengröße;
- ein Envelope wurde mit der Priorität Sofortversand in die Tabelle eingestellt;
- der SendDataManager wurde explizit von einer anderen Funktionseinheit (zum Beispiel Kassenschluss-Vorgangsart) angewiesen, die gespeicherten Daten zu versenden.

Beim Eintreten eines der oben genannten Ereignisse werden vorzugsweise alle als "unsent" gekennzeichneten Envelopes zu einem Bundle-Envelope zusammengesetzt und über KISS verschickt.

Mit Hilfe der Klasse KissHelper werden alle Envelopes mit dem Status "unsent" in ein Bundle-Envelope gepackt. Dieses Bundle-Envelope wird unter der Verwendung einer KissDataAction an KISS weitergeleitet. Das Verschicken des Bundle-Envelopes wird asynchron ausgeführt, um Wartezeiten beim Client zu verhindern. Nur beim eventgesteuerten Verschicken des Bundle-Envelopes wird der Vorgang synchron ausgeführt, da als Ergebnis die Information zurückgeliefert wird, ob die Envelopes verschickt wurden.

Erzeugt KISS keine Fehlermeldung, werden die versendeten Envelopes mit einem Timestamp als versendet ("sent") gekennzeichnet. Erzeugt KISS jedoch eine Fehlermeldung, so wird der Status der Envelopes auf "unsent" gesetzt. Während die Envelopes an KISS weitergegeben werden, bekommen die übergebenen Envelopes den Status "pending".

Die Klasse SendDataManager wird durch die Konfiguration in der Datei SendDataManager.config konfiguriert.

Da der SendDataManager vorzugsweise nicht in einem eigenen Prozess läuft, wird das Löschen der bereits gesendeten Envelopes erst durch ein Einstellen neuer Envelopes in die Tabelle (unter Beachtung der konfigurierten Anzahl von Tagen) ausgelöst.

### Methoden

Die Klasse SendDataManager leitet vom Interface ISendDataManager, ISupportService und DataService ab. Das Interface ISendDataManager bildet die Schnittstelle zur Klasse SendDataManager, das Interface ISupportService bildet die Schnittstelle zu den Services und die Klasse DataService dient zur Erzeugung von DataServices.

Es ist besonders vorteilhaft, wenn die Klasse SendDataManager einzelne, mehrere oder alle der folgenden Methoden anbietet:
- PutEnvelope: Alte Envelopes aus der Carbon-Datenbank löschen, übergebenen Envelope in Datenbank schreiben und Versenden der Envelopes;
- GetEnvelopes: Abholen der Envelopes, die in einem bestimmten Zeitraum eingetragen wurden;
- SendEnvelopes: Versenden aller noch nicht versendeten Envelopes;
- GetServices: Hinzufügen der aktuellen Instanz des SendDataManagers dem als Parameter übergebenen ServiceHandler.

Hierdurch ist es möglich, den Vorteil einer hohen Flexibilität mit einer vollständigen Automatisierbarkeit zu verbinden.

Auch die anderen Ausführungsformen der Erfindung zeichnen sich durch geringen Wartungsbedarf, hohe Flexibilität und eine hohe beziehungsweise vollständige Automatisierbarkeit aus.

### Anwendung

Um Rohdaten verschicken zu können, sollte zunächst die Schnittstelle IRdManager, die vom RdManager implementiert wird, über das Service-Pattern angefordert werden. Der Aufruf hat folgendes Aussehen:
IRdManager manager = (IRdManager) this.site.GetService(typeof(IRdManager));

Anschließend wird eine RdItemList erzeugt. Die Erzeugung der RdItemList wird in folgender Weise durchgeführt:
RdItemList list = new RdItemList();

Die Rohdatensätze werden durch Erzeugen von RdItem Instanzen angelegt. Dabei wird dem Konstruktor der RdItem Klasse die ID des Templates zum Erzeugen der XML-Struktur übergeben.
RdItem someItem = new RdItem(templateID );

Innerhalb der XML-Struktur können rdFragment-Elemente mit einer Session-ID vorkommen.
<rdFragement>471146104509</rdFragment>

Parallel dazu wird eine RdItemFragment Instanz erzeugt und die Session-ID dem Konstruktor übergeben.
RdItemFragment fragment = new RdItemFragment("471146104509", templateID);

Mit Hilfe der Methoden AddRdItem und AddRdItemFragment der IRdManager Schnittstelle werden die Rohdaten an den RdManager übergeben.

Sind alle Rohdaten erzeugt, so wird die Methode CloseAndSend der IRdManager Schnittstelle aufgerufen. Diese führt zur technischen Komplettierung der Rohdatensätze die folgenden Schritte durch:
- Integrieren der gekapselten Rohdatensatz-Fragmente aus den RdItemFragment-Instanzen in die jeweiligen RdItem-Instanzen,
- Sortierung der RdItem-Instanzen auf Basis des temporären Schlüssels,
- Vergabe der endgültigen Rohdatenschlüssel,
- Verwaltung und Anstoß des Ersetzungsprozesses der temporären Schlüssel in den Gründen der Rohdatensätze durch die zugeordneten endgültigen Rohdatensatzschlüssel im RdItem,
- Verwaltung und Anstoß des Löschprozesses der in den gekapselten Rohdatensätzen enthaltenen nicht befüllten Elemente,
- Verwaltung und Anstoß des Validierungsprozesses gegen die XML-Schemata der jeweiligen Rohdatensätze
- Übergabe der finalisierten RdItem-Instanzen an den RdSender.

### Schnittstellen

Der folgende Abschnitt beschreibt die Programmierschnittstellen der Rohdatenkomponente. Hier werden die einzelnen Eigenschaften und Methoden der Rohdatenklassen dargestellt und deren Verwendung beschrieben.

### Eigenschaften

### Klasse RdSender

Die Klasse RdSender enthält keine Eigenschaften.

### Klasse RdItemFilter

Die Klasse RdItemFilter enthält keine Eigenschaften.

### Klasse SendDataManager

Die Klasse SendDataManager enthält keine Eigenschaften.

### Klasse RdItem

### AppI

- liest oder setzt die AppID des Rohdatenschlüssels für die Instanz.

### BranchID

- liest oder setzt die FilialID des Rohdatenschlüssels für die Instanz.

### ClientID

- liest oder setzt die ClientID des Rohdatenschlüssels für die Instanz.

### IDElement

- liest den Rohdatenschlüssel.

### Priority

- setzt oder liest die Versandpriorität.

### SinkList

- setzt oder liest die Liste der Kiss-Senken.

### TemporaryID

- liest die temporäre ID.

### Klasse RdItemBase

Document
- Zugriff auf das gekapselte Xml-Dokument.

### Klasse RdItemFragment

### Session-ID

- gibt die Session-ID der das Fragment erzeugenden Basis Vorgangsart zurück.

### Klasse RdManager

Die Klasse RdsManager enthält keine Eigenschaften

### Klasse RdSessionAdapter

Die Klasse RdSessionAdapter enthält keine Eigenschaften

### Methoden

### Klasse RdItemFilter

### AddRdItem(item)

- prüft, ob das übergebene Item herausgefiltert werden muss und reicht es, falls nicht, an den RdManager weiter.

### Syntax

public void AddRdItem(RdItem item)

### AddRdItemFragment(fragment)

- da RdItemFragments nicht gefiltert werden, werden diese ohne Beachtung direkt an den RdManager weitergeleitet.

### Syntax

public void AddRdItemFragment(RdItemFragment fragment)

### CloseAndSend ()

- ruft die gleichnamige Methode des RdManagers auf.

### Syntax

Public Hashtable CloseAndSend()

### Klasse RdSender

### PutRdItem(item, validationsuccessful)

- verpackt das übergebene RdItem in einen KissEnvelope und reicht diesen an den SendDataManger weiter.

### Syntax

public void PutRdItem(RdItem item, bool validation Successful)

### Klasse SendDataManager

### PutEnvelope(soapEnvelope, priority)

- löscht alte Envelopes aus der Datenbank, legt den übergebenen Envelope in der Datenbank ab und überprüft, ob ein Versand erfolgen muss. Ist dies der Fall, geschieht dies asynchron.

### Syntax

public void PutEnvelope(XmlElement soapEnvelope, bool priority)

### GetEnvelopes(fromDate, toDate)

- liefert die KissEnvelopes, deren Erstellungsdatum zwischen den beiden übergebenen Daten liegt.

### Syntax

public XmlElement[] GetEnvelopes(DateTime fromDate, DateTime toDate)

### Klasse RdItem

### InsertRdItemFragment

- fügt das Xml des übergebenen RdItemFragments an den Stellen im XmlDokument ein, wo sich ein rdFragment-Element mit der Session-ID des übergebenen RdItemFragments befindet.

### RemoveNonDefinedElements

- entfernt leere Elemente aus dem Dokument.

### ReplaceKeyInReason

- Diese Methode ersetzt den temporären Schlüssel im GrundElement des Rohdatensatzes durch den übergebenen endgültigen Rohdatenschlüssel.

### SetFinalID

- trägt die endgültige laufende Nummer im Schlüssel-Teil des Rohdatensatzes ein.

### Validate

- validiert das XmlDokument des RdItem gegen sein Schema.

### Klasse RdItemBase

### GetValueByXPath

- liefert einen Wert mittels XPath-Ausdruck.

### SetValueByXPath

- schreibt einen Wert mittels XPath-Ausdruck.

### Klasse RdManager

### AddRdItem

- dient dem Hinzufügen einer/von RdItem-Instanz/en.

### AddRdItemFragment

- dient dem Hinzufügen einer/von RdItemFragment-Instanz/en.

### CloseAndSend

- Zunächst werden die RdItemFragment Instanzen an die entsprechenden Stellen in die RdItem Instanzen eingesetzt. Anschließend werden die RdItem Instanzen nach ihrer temporären Identität sortiert und die endgültigen Rohdatenschlüssel werden vergeben. In den Gründen werden die temporären Identitäten durch die endgültigen Rohdatenschlüssel ersetzt. Die nicht befüllten Elemente werden aus den Rohdaten entfernt. Die RdItem-Instanzen werden dem RdSender übergeben.

### Klasse RdSessionAdapter

### StoreRdItemList

- speichert eine RdItemList Instanz in einer Session.

### LoadRdItemList

- liest eine RdItemList aus einer Session und gibt diese zurück.

### StoreRdListsInRdManager

- übergibt RdItemLists in Sessions an die Instanz einer die IRdManager Schnittstelle implementierenden Klasse.

### Exceptions

Die Rohdatenkomponente kann zur Laufzeit beispielsweise folgende Ausnahmen auslösen:

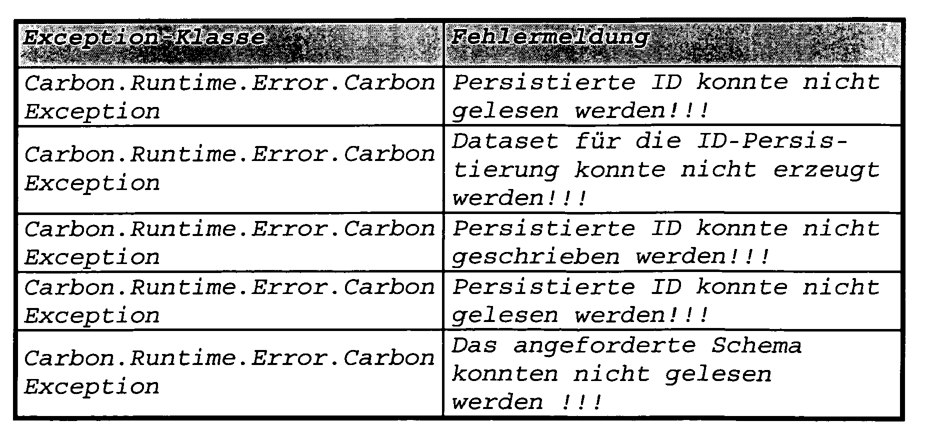

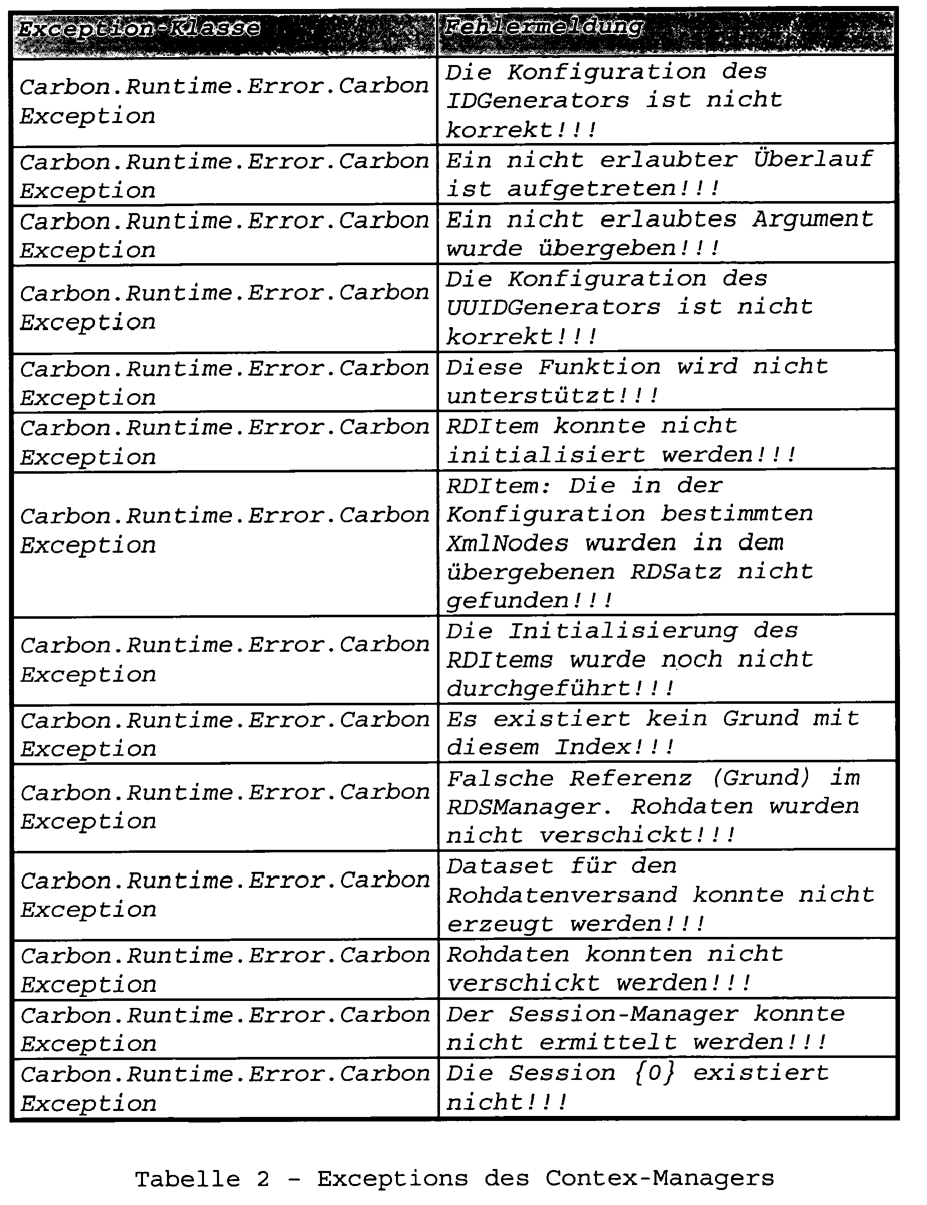

### Konfiguration

Die Rohdatenkomponente wird den Vorgangsarten in Form von Services zur Verfügung gestellt. Diese Services werden in der zentralen Konfigurationsdatei App.config konfiguriert, und vom Application-Manager eingelesen (siehe Kapitel Architektur/Application-Manager).

Des Weiteren nutzt die Rohdatenkomponente DataServices um die Rohdaten in einer Datensenke zu speichern.

Die vom RdsManager benutzten ID-Generatoren benötigen ebenfalls eine Konfiguration, die im Konfigurationserzeichnis des Clients in der Datei Rohdaten.xml abgelegt ist. Die Sektion für die IDGeneratoren hat folgendes Aussehen:

### <SequenceGenerators>

<SequenceGenerator ID="FinalIDs">
<IsPersisted>true</IsPersisted>
<LowerBorder>1</LowerBorder>
<UpperBorder>999</UpperBorder>
<RestartSequence>true</RestartSequence>
<PersistenceKey>FinalID</PersistenceKey>
</SequenceGenerator>
</SequenceGenerators>
<UUIDGenerator>
<IsPersisted>true</IsPersisted>
<PersistenceKey>PersistedGuid</PersistenceKey>
</UUIDGenerator>

Im Anschluss erfolgt die detaillierte Betrachtung der einzelnen Knoten:

### IsPersisted

- gibt an, ob die ID persistiert werden soll

### LowerBorder

- gibt die untere Grenze der ID an (Domäne)

### UpperBorder

- gibt die obere Grenze der ID an (Domäne)

### RestartSequence

- gibt an, ob bei einem Überlauf von vorne angefangen werden soll

### PersistenceKey

- legt den Schlüssel fest, mit dem die ID in eine Datensenke geschrieben wird

Des Weiteren müssen RdItems konfiguriert werden. Die Sektion hierfür sieht folgendermaßen aus:

### <RDItem>

<Session-ID>/Rd_Satz/Session-ID</Session-ID>
<FilialID>/Rd_Satz/Schluessel/FilialID</FilialID>
<ClientID>/Rd_Satz/Schluessel/ClientID</ClientID>
<Nr>/Rd_Satz/Schluessel/Nr</Nr>
<GrundNr>/Rd_Satz/vorgang/Grund/Schluessel/Nr</GrundNr> </RDItem>

Die Knoten innerhalb dieser Sektion beschreiben allesamt XPath-Ausdrücke, mit deren Hilfe die Element-Daten aus dem Rohdatenschema gelesen werden können.

### RdItemFilter

Der RdItemFilter wird durch die Datei "RdItemFilter.config" konfiguriert. Hier wird der XPath-Ausdruck festgelegt, der auf den VGA Schlüssel innerhalb des Rohdatensatzes verweist.

Außerdem werden hier die Rohdatensätze aufgrund ihres VGA-Schlüssels konfiguriert.

Der Aufbau der Konfigurationsdatei sieht folgendermaßen aus:

### <RdItemFilter>

<VgaKeyXPath>RdSatz/RdBody/Vga/VgaBezeichnung</VgaKeyXPath> <vgaList>
<vga key="1355" typ="A" ejo="1" rohdaten="0" />
<vga key="4711" typ="B" ejo="1" rohdaten="1" />
<vga key="1234" typ="A" ejo="0" rohdaten="0" />
<vga key="9876" typ="B" ejo="0" rohdaten="1" />
<vga key="9968" typ="A" ejo="1" rohdaten="1" />
</vgaList>
</RdItemFilter>

Ob eine VORGANGSART herausgefiltert wird, wird durch den Wert des Attributs "rohdaten" bestimmt. Ist hier der Wert "0" eingetragen, werden die Rohdaten dieser VORGANGSART herausgefiltert.

### RdSender

Der RdSender wird durch die Datei "RdSender.config" konfiguriert. Hier wird festgelegt, welche Datenart im externen Header der erzeugten KissEnvelopes eingetragen werden soll. Außerdem wird hier das Standardrouting für die erzeugten Envelopes konfiguriert.

Die Konfigurationsdatei ist folgendermaßen aufgebaut:

### <RdSender>

<Datenart>RD</Datenart>
<StandardRoutingInformationen>R</StandardRoutingInformationen>
</RdSender>

### SendDataManager

Der SendDataManager wird durch die Datei "SendDataManager.config" konfiguriert. Hier werden die DataActions, die für das Versenden und Ablegen der KissEnvelopes benötigt werden, konfiguriert. Die Konfiguration dieser DataServices ist relativ komplex und erstreckt sich bis zu von maximalen Gesamtgrößen für noch nicht versendete Envelopes in Bytes und die maximale Verweildauer für versendete Envelopes in Tagen.

Ein besonders bevorzugter Aufbau für diesen Teil der Konfiguration sieht folgendermaßen aus:

### </SendDataManagçr>

<DueTime>30</DueTime>
<MaxBytes>1000</MaxBytes>
</SendDataManagçr>

### Integration

Es ist besonders vorteilhaft, möglichst viele, insbesondere sämtliche Funktionen der Rohdatenkomponente den Vorgangsbearbeitungsmodulen über Services bereitzustellen.

### Bestandteile

### Session-Manager

Der Session-Manager SM wird beim Systemstart vom Application-Manager AM instanziiert und über den ServiceHandler den Vorgangsarten zur Verfügung gestellt. Der Session-Manager stellt Methoden zum Anlegen, Ändern und Löschen von Session-Objekten und zur Transaktionssteuerung bereit.

Der Session-Manager hält vorzugsweise keine Referenzen auf bestehende Session-Objekte. Diese bestehenden Session-Objekte werden in einer besonders bevorzugten Ausführungsform der Erfindung nur in den Vorgangsbearbeitungsmodulen referenziert.

In Fig. 3 ist ein besonders bevorzugtes Ausführungsbeispiel der Erfindung dargestellt, das sich dadurch auszeichnet, dass die Transaktionsbearbeitung unter Einbeziehung wenigstens eines Business-Objekts BO erfolgt, dass das Business-Objekt BO ein Session-Objekt SO erzeugt und dass das Session-Objekt SO wenigstens einen Datenwert in einer Datenbank aktualisiert.

Dabei ist es besonders zweckmäßig, dass der Datenwert über eine Schnittstelle DBA aktualisiert wird.

### Erzeugung einer weiteren Session-Objekt-Instanz

Die Erzeugung einer weiteren Session-Objekt-Instanz erfolgt basierend auf dem Session-Record aus der Datenbank.

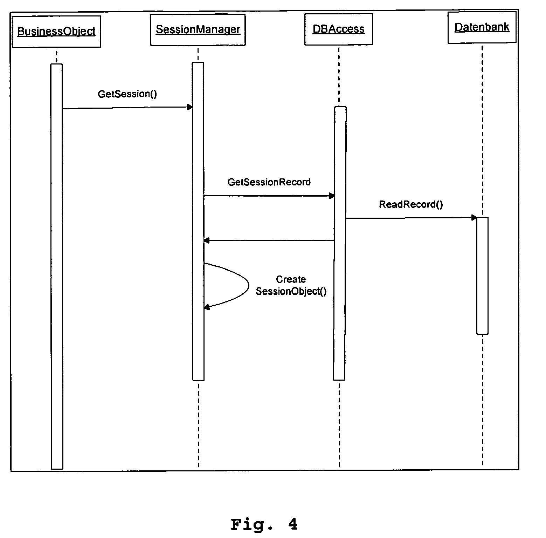

Fig. 4 zeigt eine vorteilhafte Weiterbildung der Erfindung, die sich - vorzugsweise in Kombination mit den in Fig. 3 dargestellten Verfahrensschritten - dadurch auszeichnet, dass das Business-Objekt BO an einem Session-Manager SM eine Aufforderung zur Erzeugung eines Session-Objektes schickt.

Es ist zwar besonders bevorzugt, die in Fig. 4 dargestellte Ausführungsform mit der in Fig. 3 dargestellten zu kombinieren, jedoch ist es auch möglich, diese Ausführungsformen separat zu implementieren.

Das in Fig. 4 dargestellte Sequenzdiagramm zeigt ferner die zweckmäßige Maßnahme, dass das Business-Objekt BO an den Session-Manager SM eine Anforderung zur Erzeugung einer weiteren Session-Objekt-Instanz schickt.

Hierdurch ist es möglich, verschiedene Bearbeitungszustände der Transaktionen zur weiteren Datenverarbeitung und/oder zur Datensicherung einzusetzen.

Außerdem ist hierdurch eine Wiederaufnahme unterbrochener Transaktionen möglich.

CARBON unterstützt Transaktionen beim Session-Handling. Session-Objekte, die in einer Transaktion erstellt wurden, werden bei Abbruch der Transaktion gelöscht.

Unterstützt eine Vorgangsart Transaktionen, so werden auch die von ihr erstellten Session-Objekts in einer Transaktionsklammer verwaltet. Die Verwaltung der Transaktionen übernimmt der ContextManager. Wird eine Vorgangsart abgebrochen, die Transaktionen unterstützte, ruft der ContextManager die Abort-Methode des Session-Managers auf, als Argument wird ein TransaktionInfo-Objekt übergeben. Dieses Objekt enthält als Property die TransactionID, anhand dieser ID werden der Vorgangsart zugeordneten Session-Records ermittelt und aus der Session-Tabelle gelöscht.

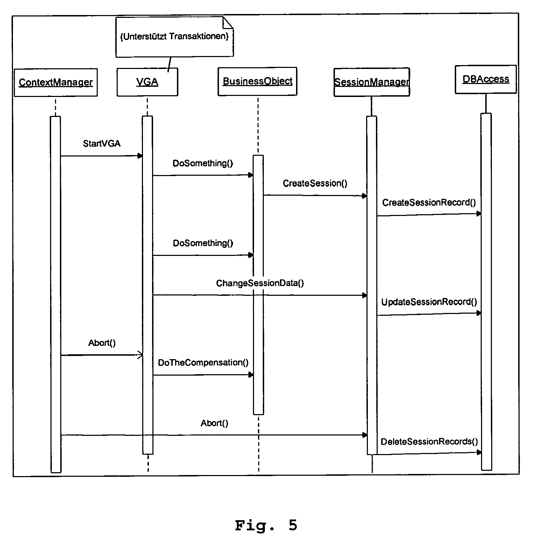

Fig. 5 zeigt ein Sequenzdiagramm mit einer Transaktionsunterstützung beim Session-Handling.

Zweckmäßigerweise beinhaltet diese Transaktionsunterstützung, dass ein Context-Manager CM das Vorgangsbearbeitungsmodul VGA durch Übermittlung eines Startbefehls StartVGA startet und dass das Vorgangsbearbeitungsmodul VGA das Business-Objekt BO erzeugt.

Aus dem in Fig. 5 dargestellten Sequenzdiagramm ergibt sich ferner, dass der Context-Manager CM wenigstens ein Vorgangsbearbeitungsmodul VGA startet.

Das die Transaktionen unterstützende beziehungsweise durchführende Vorgangsbearbeitungsmodul VGA erzeugt wenigstens ein Business-Objekt BO.

Auch hierbei ist es vorteilhaft, dass die Transaktionsbearbeitung unter Einbeziehung des Business-Objektes BO erfolgt.

Die Erzeugung des Session-Objektes erfolgt zweckmäßigerweise über den Session-Manager SM.

Für den Start des Anwendungsprogrammes auf dem Client kann im Sinne der vorzugsweise stark modularen Struktur des Gesamtsystems ebenfalls ein eigenständiges Vorgangsbearbeitungsmodul bereitgestellt werden. Dieses Anmeldungs-Vorgangsbearbeitungsmodul hat in einem besonders bevorzugten Ausführungsbeispiel der Erfindung die Aufgabe, eine Session-Hierarchie aus einer Anwendungs-Session und einer Benutzer-Session anzulegen. Das Vorgangsbearbeitungsmodul füllt diese Session mit von ihr ermittelten Werten. Die Anwendungs-Session wird wenigstens mit der Identifikation des Anzeigemittels befüllt. Dieser ArbeitsplatzTyp wird beispielsweise aus der Datenbank eines Clients ausgelesen.

Die Anwendungs-Session kann ferner mit einer Client-ID, einem FilialTyp, einem physikalischen Filialschlüssel und einem datenrelevanten Filialschlüssel befüllt werden. In einem besonders bevorzugten Ausführungsbeispiel der Erfindung werden diese Werte ebenfalls aus der Datenbank ausgelesen. Der FilialTyp kann ferner aus einer Datenbankdatei ausgelesen werden. In der Benutzer-Session wird der Wert der *userRoles* angelegt, der vorzugsweise als Zeichenkette aus der Controller-Konfigurationsdatei des Vorgangsbearbeitungsmoduls VGA eingelesen wird.

Das Anmeldungs-Vorgangsbearbeitungsmodul beinhaltet mehrere Klassen, welche zur Durchführung der Anmeldung verschiedene Funktionen übernehmen. Beispielsweise wird eine Dataservice-Klasse bereitgestellt, welche unter Verwendung von Datenaktionen den ArbeitsplatzTyp, die Client-ID, den Filialschlüssel und den Filialtyp ermittelt. Die Klasse wird vorzugsweise nur von der Funktionseinheit des VGA genutzt. Eine weitere Logon-Klasse verarbeitet den Logon-Command, der vom Maskenarbeitsbereich ausgelöst wird. Die Methode Logon () führt dabei alle Tätigkeiten aus, die im Rahmen der Anmeldung stattfinden. Die Anwendungs-Session und die Benutzer-Session werden beispielsweise mittels eines SessionCreatorPlug-Ins angelegt. Das SessionCreatorPlug-In erzeugt eine Session-ID und erstellt die jeweilige Session. Nach Befüllung der Sessions mit den genannten Werten beendet sich das Anmeldungs-Vorgangsbearbeitungsmodul und startet vorzugsweise ein Nachfolgemodul. Der Schlüssel des Nachfolgemoduls wird aus der Konfigurationsdatei des Anmeldungs-Vorgangsbearbeitungsmoduls ausgelesen.

### Zugriffskomponente

Die Zugriffskomponente der Datenkomponente enthält die technischen Informationen zu Aktionen auf den Datensystemen und stellt eine technische Verwaltungsschicht dar. Sie enthält die Logik zur Erzeugung und Parametrisierung von technischen Zugriffen auf die Datensysteme, jedoch vorzugsweise keine fachliche Logik. Der Zugriff auf die Datensysteme erfolgt zweckmäßigerweise über Schnittstellen in Form von Datenaktionen und über technische Adapterklassen.

Die Zugriffskomponente wird vorzugsweise als abstrakte Klasse *DataService* ausgeführt. Sie fungiert als Factory für alle Datenaktionen. Eine Datenaktion wird durch eine Klasse implementiert, die ein IDataAction-Interface implementiert. Jede als Datenaktion fungierende Klasse muss das IDataAction-Interface implementieren. Über dieses IDataAction-Interface werden alle lokalen und servergestützten Datenzugriffe durchgeführt. Das IDataAction-Interface realisiert vorzugsweise alle allgemeinen Datenoperationen wie Lesen, Schreiben und Manipulieren. Vorzugsweise ist eine erste IDataAction für Serverzugriffe und eine zweite IDataAction für Datenbankzugriffe vorgesehen.

### Bezugszeichenliste:

- AM: Application-Manager
- AP: Arbeitsplatz
- API: Application Programming Interface
- B: Benutzer
- BD: Basisdienst
- BEB: Backend-Business-Logik
- BM: Berechtigungsmodul
- BL: Business-Logik
- BLA: Business-Schicht
- BP: Berechtigungs-Plugin
- C: Controller
- CF: Carbon-Framework
- CH: Carbon-Host
- CI: Schnittstellenmodul
- CM: Context-Manager
- DC: Datencontainer
- DK: Daten-Komponente
- DKM: Datenkomponentenmodul
- DR: Druckkomponente
- FT: Filialtyp
- KISS: Benachrichtigungskomponente
- NKM: Kassenmodul
- PK: Peripheriekomponente
- PM: Presentermodul
- RDM: Rohdatenmodul
- RKM: Rohdatenkomponentenmodul
- RM: Recovery-Manager
- SL: Data Service Layer
- SM: Session-Manager
- VGA: Vorgangsbearbeitungsmodul
- W: Workspace

## Patentansprüche

1. Transaktionssystem zum Verarbeiten von Transaktionsinformationen,
**dadurch gekennzeichnet,**
**dass** das Transaktionssystem mindestens ein Vorgangsbearbeitungsmodul (VGA) enthält, dass das Vorgangsbearbeitungsmodul (VGA) Transaktionsinformationen erzeugt und/oder verarbeitet, dass das Vorgangsbearbeitungsmodul (VGA)mit einem Session-Manager (SM) verbindbar sind, dass der Session-Manager (SM) so ausgebildet ist, dass er die Transaktionsinformationen in Form von Sessions speichern und verwalten kann und dass der Session-Manager (SM) mit einem Speicherelement zum Speichern verbunden ist und ein Speichern folgender Informationen in dem Speicherelement steuert:
• Session-Identifikationsangaben (Session-ID) zum Identifizieren einzelner Sessions,
• Datenwerte für die einzelnen Sessions.

2. Transaktionssystem nach Anspruch 1,
**dadurch gekennzeichnet,**
**dass** die Sessions-Identifikationsangaben als fortlaufende Nummern ausgebildet sind.

3. Transaktionssystem nach einem oder beiden der Ansprüche 1 oder 2,
**dadurch gekennzeichnet,**
**dass** die Sessions eine variable Anzahl von Datenelementen enthalten.

4. Transaktionssystem nach Anspruch 3,
**dadurch gekennzeichnet,**
**dass** die Datenelemente sich auf eine einzelne Transaktion beziehen.

5. Transaktionssystem nach Anspruch 3,
**dadurch gekennzeichnet,**
**dass** die einer Session zugehörigen Datenelemente Transaktionsinformationen von mehreren Transaktionen umfassen.

6. Transaktionssystem nach einem oder mehreren der vorangegangenen Ansprüche,
**dadurch gekennzeichnet,**
**dass** der Session-Manager (SM) ein Modul zur Verwaltung zusammenhängender Rohdatensätze enthält.

7. Transaktionssystem nach Anspruch 6,
**dadurch gekennzeichnet,**
**dass** der Session-Manager (SM) mit einer Rohdatenkomponente verbunden ist.

8. Transaktionssystem nach Anspruch 7,
**dadurch gekennzeichnet,**
**dass** ein Context-Manager Schnittstellen bereithält, die eine Datenübertragung zwischen dem Session-Manager (SM) und der Rohdatenkomponente ermöglichen können.

9. Transaktionssystem nach einem oder mehreren der vorangegangenen Ansprüche,
**dadurch gekennzeichnet,**
**dass** wenigstens ein Teil der Vorgangsbearbeitungsmodule und wenigstens eine der Dienstkomponenten durch eine Benachrichtigungskomponente über wenigstens zwei Übertragungskanäle verbindbar sind, dass die Benachrichtigungskomponente ein Mittel zur Zuweisung eines der Übertragungskanäle aufweist und dass das Mittel zur Zuweisung des Übertragungskanals so ausgestaltet ist, dass es die Zuweisung anhand von Informationen über die zu übermittelnden Daten vornehmen kann.

10. Verfahren zum Verarbeiten von Transaktionsinformationen,
**dadurch gekennzeichnet,**
**dass** die Transaktionsinformationen in wenigstens einem Vorgangsbearbeitungsmodul (VGA) verarbeitet werden, dass die Transaktionsinformationen in Form von Sessions gespeichert werden, wobei die Speicherung sowohl Datenwerte für in den einzelnen Sessions enthaltene Datenelemente als auch die jeweiligen Sessions identifizierende Session-Identifikationsangaben (Session-ID) umfasst.

11. Verfahren nach Anspruch 11,
**dadurch gekennzeichnet,**
**dass** die Transaktionsbearbeitung unter Einbeziehung wenigstens eines Business-Objekt (BO) erfolgt, dass das Business-Objekt (BO) ein Session-Objekt (SO) erzeugt und dass das Session-Objekt (SO) wenigstens einen Datenwert in einer Datenbank aktualisiert.

12. Verfahren nach Anspruch 11,
**dadurch gekennzeichnet,**
**dass** der Datenwert über eine Schnittstelle (DBA) aktualisiert wird.

13. Verfahren nach einem oder mehreren der Ansprüche 10 bis 12,
**dadurch gekennzeichnet,**
**dass** das Business-Objekt (BO) an einem Session-Manager (SM) eine Aufforderung zur Erzeugung eines Session-Objektes schickt.

14. Verfahren nach Anspruch 13,
**dadurch gekennzeichnet,**
**dass** das Business-Objekt (BO) an den Session-Manager (SM) eine Anforderung zur Erzeugung einer weiteren Session-Objekt-Instanz schickt.

15. Verfahren nach einem oder mehreren der Ansprüche 10 bis 14,
**dadurch gekennzeichnet,**
**dass** ein Context-Manager (CM) das Vorgangsbearbeitungsmodul (VGA) durch Übermittlung eines Startbefehls (StartVGA) startet und dass das Vorgangsbearbeitungsmodul (VGA) das Business-Objekt (BO) erzeugt.
